# EUROPEAN PATENT APPLICATION

(11) **EP 4 501 726 A1**
(43) Date of publication of application: **05.02.2025**
(21) Application number: 23780587.4
(22) Date of filing: 28.03.2023
(51) Int. Cl.: B60W 20/15, B60K 6/48, B60K 6/54, B60L 15/20, B60W 10/02, B60W 10/04, B60W 10/06, B60W 10/08, B60W 20/20, B60W 20/40, B62M 23/02

(54) **VEHICLE CONTROL DEVICE, VEHICLE PROVIDED THEREWITH, AND VEHICLE CONTROL METHOD**

(30) Priority: 29.03.2022 JP 2022053378; 26.12.2022 JP 2022208059
(71) Applicant: Kawasaki Motors, Ltd., Akashi, Hyogo 673-8666 (JP)
(72) Inventor: OBAYASHI, Kosuke, Kobe-shi, Hyogo 650-8670 (JP); NAKAYAMA, Kyotaro, Kobe-shi, Hyogo 650-8670 (JP)
(74) Representative: Witte, Weller & Partner Patentanwälte mbB
(86) International application number: PCT/JP2023/012640
(87) International publication number: WO 2023/190578

(57) **Abstract**

A control device of a vehicle according to one aspect is a control device of a vehicle, the vehicle including at least one traveling driving source that generates torque for driving a driving wheel, the control device including processing circuitry configured to execute torque change control in which when the processing circuitry acquires a torque change request by which transmitted torque transmitted from the traveling driving source to the driving wheel is changed from first required torque to second required torque, the processing circuitry changes the transmitted torque from the first required torque to the second required torque. When the processing circuitry acquires the torque change request, the processing circuitry determines a shock tolerance indicating a tolerance with respect to shock generated at a vehicle body of the vehicle. The processing circuitry executes the torque change control such that a torque change time that is a time required to change the transmitted torque from the first required torque to the second required torque is changed in accordance with the determined shock tolerance.

## Description

### Technical Field

### Cross-Reference to Related Applications

This application claims priority to and the benefit of Japanese Patent Application No. 2022-53378 filed on March 29, 2022 and Japanese Patent Application No. 2022-208059 filed on December 26, 2022, the entire disclosures of which are incorporated herein by reference in their entirety.

### Field

The present disclosure relates to a control device of a vehicle including a traveling driving source that generates torque for driving a driving wheel, a vehicle including the control device, and a vehicle control method.

### Background Art

For example, PTL 1 discloses a hybrid vehicle including an engine and an electric motor as traveling driving sources. When switching an EV mode in which a driving wheel is driven by power generated by the electric motor to a HEV mode in which the driving wheel is driven by the power generated by the electric motor and power generated by the engine, the hybrid vehicle performs such control that: motor target torque to be output by the electric motor is changed from 100% of total required torque to substantially 0%; and engine target torque to be output by the engine is changed from 0% of the total required torque to substantially 100%.

### Citation List

### Patent Literature

PTL 1: Japanese Laid-Open Patent Application Publication No. 2021-95015

### Summary of Invention

### Technical Problem

It is desirable that a time required to change torque for driving the driving wheel be short. However, when the torque for driving the driving wheel is sharply changed, shock may be generated at a vehicle body, and such shock may lead to uncomfortable feeling of an occupant.

An object of the present disclosure is to provide a control device of a vehicle, a vehicle including the control device, and a vehicle control method, each of which can reduce a time required to change torque for driving a driving wheel while suppressing uncomfortable feeling of an occupant which is caused by changing the torque.

### Solution to Problem

A control device of a vehicle according to one aspect of the present disclosure is a control device of a vehicle, the vehicle including at least one traveling driving source that generates torque for driving a driving wheel, the control device including processing circuitry configured to execute torque change control in which when the processing circuitry acquires a torque change request by which transmitted torque transmitted from the traveling driving source to the driving wheel is changed from first required torque to second required torque, the processing circuitry changes the transmitted torque from the first required torque to the second required torque. When the processing circuitry acquires the torque change request, the processing circuitry determines a shock tolerance indicating a tolerance with respect to shock generated at a vehicle body of the vehicle. The processing circuitry executes the torque change control such that a torque change time that is a time required to change the transmitted torque from the first required torque to the second required torque is changed in accordance with the determined shock tolerance.

A vehicle according to one aspect of the present disclosure includes: a driving wheel; at least one traveling driving source that generates torque for driving the driving wheel; and the control device fixed to the vehicle body.

A vehicle control method according to one aspect of the present disclosure is a vehicle control method of controlling a vehicle including at least one traveling driving source that generates torque for driving a driving wheel, the method including: by processing circuitry, when the vehicle is traveling in a state where transmitted torque transmitted from the traveling driving source to the driving wheel is first required torque, acquiring a state change request to change a state of the vehicle, the state change request including a request to change the transmitted torque from the first required torque to second required torque; determining a shock tolerance indicating a tolerance with respect to shock generated at a vehicle body of the vehicle; and changing the state of the vehicle such that a time from when the state change request is acquired until when the transmitted torque reaches the second required torque is changed in accordance with the determined shock tolerance.

### Advantageous Effects of Invention

The present disclosure provides a control device of a vehicle, a vehicle including the control device, and a vehicle control method, each of which while suppressing uncomfortable feeling of an occupant which is caused by changing torque for driving a driving wheel, can reduce a time required to change the torque.

### Brief Description of Drawings

FIG. 1 is a schematic diagram showing a vehicle according to one embodiment.
FIG. 2 is a block diagram showing a control device and its inputs and outputs.
FIG. 3 is a flowchart showing the flow of processing of switching control from an EV mode to a HEV mode.
FIG. 4 shows graphs of time changes of values in the switching control shown in FIG. 3.
FIG. 5 is a block diagram showing a function of setting a second throttle target opening degree in an engine rotational frequency control module.
FIG. 6 is a diagram showing a first shock tolerance map.
FIG. 7 is a block diagram showing a function of determining a final throttle target opening degree in a throttle opening degree determining module.
FIG. 8 is a block diagram showing a function of determining a clutch pressure command value in a clutch control module.
FIG. 9 is a diagram showing a second shock tolerance map.
FIG. 10 is a diagram showing a clutch pressure map.
FIG. 11 is a flowchart showing the flow of processing of torque change control.
FIG. 12 is a diagram showing a third shock tolerance map.
FIG. 13 is a diagram showing a torque change rate map.
FIG. 14 shows graphs of time changes of values in the switching control, the time changes being different from those shown in FIG. 4.

### Description of Embodiments

Hereinafter, embodiments will be described with reference to the drawings.

### Configuration of Vehicle

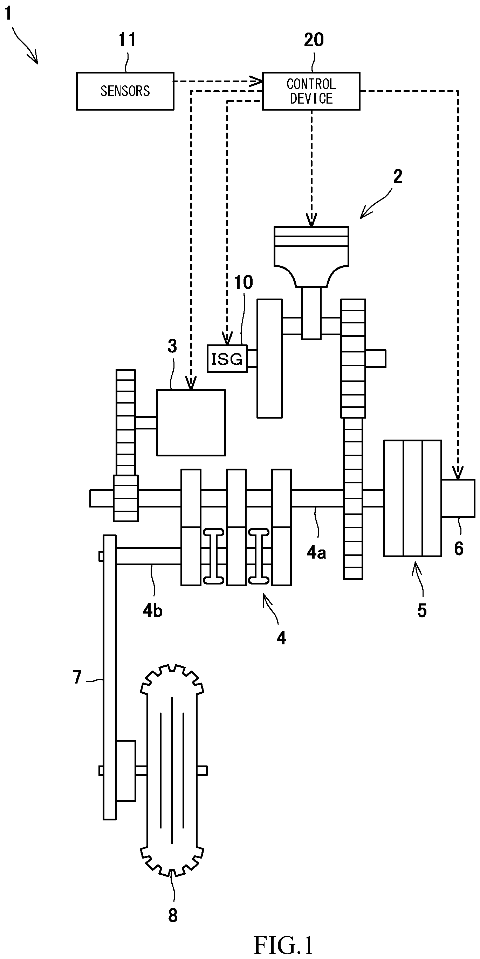

FIG. 1 is a schematic diagram showing a vehicle 1 according to one embodiment. In the present embodiment, the vehicle 1 is a motorcycle including: a rear wheel that is a driving wheel 8; and a front wheel (not shown) that is a driven wheel. The motorcycle is a preferable example of a vehicle that can turn while banking a vehicle body of the vehicle toward one side in a vehicle width direction from an upright state. The vehicle 1 may be a three-wheeled vehicle or a four-wheeled vehicle.

The vehicle 1 described in the present embodiment is a hybrid vehicle. The vehicle 1 includes an electric motor 3 and an engine 2 as two traveling driving sources that generate torque for driving the driving wheel 8. Moreover, the vehicle 1 includes: a transmission shaft (an input shaft 4a of a transmission 4 described below) that transmits driving power of the electric motor 3 to the driving wheel 8; and a clutch 5 that switches whether to transmit driving power of the engine 2 to the transmission shaft.

More specifically, as shown in FIG. 1, the vehicle 1 includes the engine 2, the electric motor 3, the transmission 4, the clutch 5, a clutch actuator 6, an output transmitting member 7, the driving wheel 8, a starter motor 10, sensors 11, and a control device 20.

The engine 2 is an internal combustion engine. The electric motor 3 is the traveling driving source that drives the driving wheel 8 together with the engine 2 or instead of the engine 2.

The transmission 4 changes the speed of rotational power output from the engine 2. The transmission 4 is, for example, a dog clutch transmission including the input shaft 4a, an output shaft 4b, and transmission gear pairs having different change gear ratios. The transmission gear pair corresponding to one gear stage selected from gear stages transmits the power from the input shaft 4a to the output shaft 4b. The selection of the gear stage may be performed by a shift operation of a rider with respect to a shift operation element.

In the present embodiment, the transmission 4 selects a pair of transmission gears from the transmission gear pairs in mechanical association with the shift operation of the rider with respect to the shift operation element. For example, the shift operation element is a shift pedal operated by a foot of the rider. The current gear stage is detected by a below-described change gear ratio sensor. In the present embodiment, the above transmission shaft is configured as the input shaft 4a of the transmission 4. For example, the transmission 4 does not have to be a dog clutch transmission and may be, for example, a continuously variable transmission.

The clutch 5 connects the engine 2 with the transmission 4 and disconnects the engine 2 from the transmission 4. The clutch 5 is, for example, a friction clutch. The clutch actuator 6 drives the clutch 5 such that the clutch 5 switches between an engaged state and a disengaged state. In the present embodiment, the clutch actuator 6 is a hydraulic actuator. The clutch actuator 6 may be another type of actuator, such as an electric actuator.

The disengaged state of the clutch 5 is a state where the power is not transmitted between the engine 2 and the input shaft 4a that is the transmission shaft. The engaged state of the clutch 5 is a state where the power is completely transmitted between the engine 2 and the input shaft 4a that is the transmission shaft. When the clutch 5 changes from the disengaged state to the engaged state, the clutch 5 changes through a half-engaged state. The half-engaged state of the clutch 5 is a state where the power is partially transmitted between the engine 2 and the input shaft 4a that is the transmission shaft.

In other words, the clutch actuator 6 is an actuator that changes the degree of engagement of the clutch 5, i.e., the degree of power transmission between the engine 2 and the transmission 4. The degree of engagement of the clutch 5 is a value that increases as frictional force generated at the clutch 5 increases. The disengaged state of the clutch 5 is a state where the degree of engagement of the clutch 5 is 0%. The engaged state of the clutch 5 is a state where the degree of engagement of the clutch 5 is 100%. The half-engaged state of the clutch 5 is a state where the degree of engagement of the clutch 5 is more than 0% and less than 100%.

In other words, when the clutch 5 includes a driving member and a driven member which can contact each other and separate from each other, and the rotational power is transmitted from the driving member to the driven member by the frictional force between the driving member and the driven member, the engaged state of the clutch 5 is a state where the rotational power is transmitted without generating a slip between the driving member and the driven member. Moreover, the half-engaged state of the clutch 5 is a state where the rotational power is transmitted while generating the slip between the driving member and the driven member. For example, the driving member and the driven member are a clutch plate and a friction plate, respectively.

The output transmitting member 7 is a member that transmits the rotational power, which is output from the output shaft 4b of the transmission 4, to the driving wheel 8. The output transmitting member 7 is, for example, a drive chain, a drive belt, a drive shaft, or the like.

When starting the engine 2, the starter motor 10 applies the rotational power to a crank shaft of the engine 2 to drive the engine 2. The starter motor 10 is attached to one end portion of the crank shaft of the engine 2. In the present embodiment, the starter motor 10 is, for example, an integrated starter generator (ISG). To be specific, the starter motor 10 can drive the engine 2 when starting the engine 2 and can generate electric power by being driven by the engine 2. However, the starter motor 10 does not have to be the ISG and may be a motor that has a function of driving the engine 2 when starting the engine 2.

The control device 20 controls the engine 2, the electric motor 3, the clutch actuator 6, and the starter motor 10 based on information detected by the sensors 11. The control device 20 may be a single control unit or may be control units located distributedly. The control device 20 includes a processor, a volatile memory, a non-volatile memory, an I/O interface, and the like in terms of hardware. Details of functions of the control device 20 will be described later.

The sensors 11 include: sensors that detect the operations of the rider; and sensors that detect the states of the vehicle except for the operations of the rider. For example, the sensors 11 include one or more of an accelerator operation amount sensor, a brake operation amount sensor, a shift operation sensor, a change gear ratio sensor, a front wheel rotational frequency sensor, a rear wheel rotational frequency sensor, a vehicle body pitch angle sensor, a suspension stroke sensor, a fuel remaining amount sensor, a clutch state sensor, an engine rotational frequency sensor, a motor rotational frequency sensor, a brake state sensor (brake pressure sensor), a gyro sensor, a GPS sensor, a camera, a steering angle sensor, a sensor that detects the operation of the rider with respect to a direction indicator, a battery management unit that detects a SOC, and the like.

The vehicle 1 includes traveling modes which are different from each other regarding at least one of the states of the engine 2, the electric motor 3, and the clutch 5. The traveling modes of the vehicle 1 are switched by the control device 20. Specifically, the traveling modes include a first traveling mode, a second traveling mode, and a transition mode.

The first traveling mode is a traveling mode that does not require the driving of the engine 2. In other words, the first traveling mode is a traveling mode in which the vehicle 1 travels with the clutch 5 in the disengaged state. For example, the first traveling mode is an EV mode in which the driving wheel 8 is driven by the power generated by the electric motor 3. In the EV mode, the clutch 5 becomes the disengaged state such that the engine 2 does not become resistance when the electric motor 3 drives. In the EV mode, the electric motor 3 becomes a driving state at the time of acceleration and becomes a regenerative state at the time of deceleration. Basically, in the EV mode, the engine 2 is in a stop state. However, in the EV mode, the engine 2 may drive at low load for warming up, for example. This is because when the engine 2 is driving, and the clutch 5 is in the disengaged state, the power generated by the engine 2 is not transmitted to the driving wheel 8.

The second traveling mode is a mode in which the driving wheel 8 is driven by at least the power generated by the engine 2. In other words, the second traveling mode is a traveling mode in which the vehicle 1 travels with the clutch 5 in the engaged state. For example, the second traveling mode is a HEV mode in which the driving wheel 8 is driven by both of the power generated by the electric motor 3 and the power generated by the engine 2. Moreover, for example, in the HEV mode, the engine 2 may be driven without driving the electric motor 3, and the driving wheel 8 may be driven only by the rotational power of the engine 2. In the HEV mode, the clutch 5 becomes the engaged state such that the rotational power of the engine 2 is transmitted to the driving wheel 8 through the transmission 4. In the HEV mode, the electric motor 3 becomes the driving state at the time of the acceleration and assists the rotation of the transmission shaft driven by the engine 2. Moreover, in the HEV mode, the electric motor 3 becomes the regenerative state at the time of the deceleration.

The transition mode is a switch control mode that is between the EV mode and the HEV mode when the EV mode is changed to the HEV mode. In the present embodiment, the transition mode includes different control states, such as a rotational frequency synchronization control state and a torque change control state. When changing the traveling mode from the EV mode to the HEV mode with the engine 2 in the stop state, the transition mode also includes an engine start state that is a state where control of starting the engine 2 is performed. Switching of the traveling mode by the control device 20 will be described later in detail.

### Control System

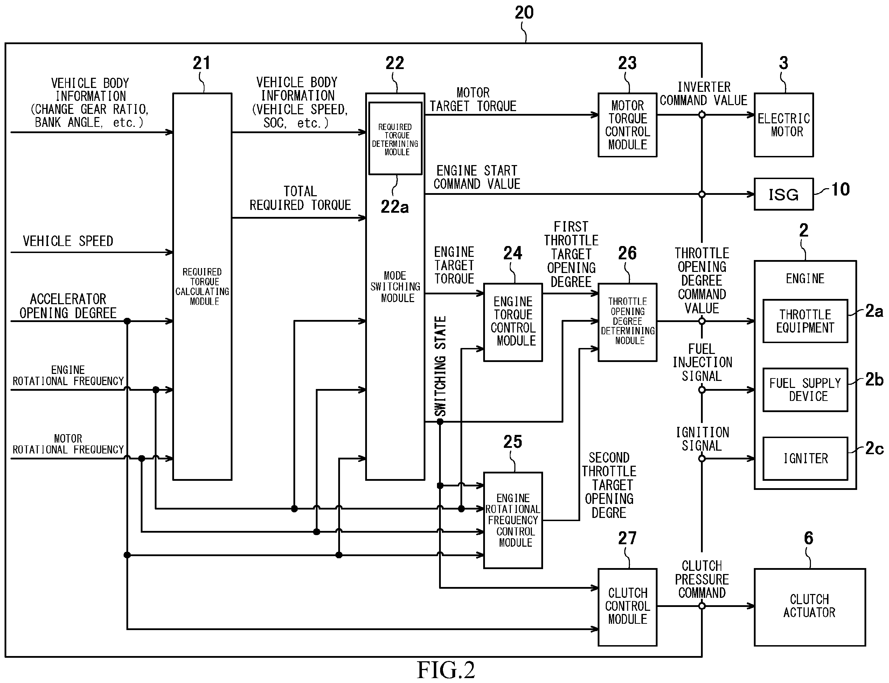

FIG. 2 is a block diagram showing the control device 20 and its inputs and outputs. As shown in FIG. 2, the control device 20 includes a required torque calculating module 21, a mode switching module 22, a motor torque control module 23, an engine torque control module 24, an engine rotational frequency control module 25, a throttle opening degree determining module 26, and a clutch control module 27. Each of these modules 21 to 27 of the control device 20 is configured as a functional block that is realized in such a manner that the processor performs calculation processing by using the volatile memory based on a program stored in the non-volatile memory. The processor is one example of processing circuitry.

The required torque calculating module 21 calculates required torque from information received from the sensors 11 or information generated based on the information received from the sensors 11. For example, the required torque calculating module 21 calculates the required torque from a vehicle body posture, a change gear ratio, a SOC (State Of Charge), a vehicle speed, an accelerator opening degree, an engine rotational frequency, a motor rotational frequency, and the like.

The vehicle body posture includes, for example, at least one of a roll angle (i.e., a bank angle), a pitch angle, a slip ratio, a steering angle, direction indicator information, vehicle position information, or front camera information. The roll angle and the pitch angle are calculated by, for example, a detected value of a gyro sensor mounted on the vehicle but may be calculated from a detected value of a roll angle sensor and a detected value of a pitch angle sensor. The pitch angle may be calculated from a stroke amount of a front suspension and a stroke amount of a rear suspension which are detected by a suspension stroke sensor.

The change gear ratio of the transmission 4 is detected by a change gear ratio sensor. For example, the change gear ratio sensor is a gear position sensor that detects the current gear stage of the transmission 4.

The slip ratio is calculated by, for example, a formula "(driving wheel rotational frequency - driven wheel rotational frequency)/driven wheel rotational frequency," but may be, for example, an increasing rate of the driving wheel rotational frequency. The steering angle is, for example, calculated from a detected value of a steering angle sensor. The direction indicator information is acquired as left-turn indicator operation information or right-turn indicator operation information based on a signal generated when a user has operated the direction indicator. The vehicle position information is information indicating a traveling position of the vehicle 1 on a map based on a detected value of a GPS sensor and map information. The front camera information is image information acquired from an onboard camera that takes an image of a front side of the vehicle 1.

The SOC indicates the state of charge of a battery that stores electric power to be supplied to the electric motor 3. For example, the SOC is detected by the battery management unit that is located at the battery and controls the battery.

The vehicle speed is calculated from, for example, a detected value of a rotational frequency sensor of the driven wheel (for example, the front wheel) but may be calculated from GPS information or the like. The motor rotational frequency is calculated by, for example, a detected value of a motor rotational frequency sensor located at a rotating shaft of the electric motor 3 but may be calculated from a control signal of the electric motor 3. The accelerator opening degree denotes an accelerator operation amount of the user and can be acquired from an output of an accelerator operation amount sensor. The engine rotational frequency is detected by an engine rotational frequency sensor. The engine rotational frequency can be calculated from an output of a crank angle sensor that detects a crank angle of the crank shaft of the engine 2.

The required torque calculating module 21 calculates the required torque, specifically, torque to be output from all the traveling driving sources (the engine 2 and the electric motor 3) as total required torque based on various types of information described above.

The mode switching module 22 recognizes a current traveling state based on the total required torque and the like and then determines an optimal traveling mode from the above traveling modes. The traveling mode may be determined based on the total required torque, and in addition, the vehicle body posture, the SOC (State Of Charge), the vehicle speed, the accelerator opening degree, the engine rotational frequency, the motor rotational frequency, another parameter, or the like.

When the current traveling mode and the determined optimal traveling mode are different from each other, the mode switching module 22 acquires a mode switching request to switch the current traveling mode to the optimal traveling mode. In the present embodiment, the processor itself of the control device 20 determines based on various parameters described above whether or not a predetermined mode switching condition has been satisfied, and when it is determined that the mode switching condition has been satisfied, the mode switching request is generated. However, the mode switching request may be information received by the processor of the control device 20 from an outside. To be specific, acquiring the mode switching request denotes generating the mode switching request or receiving the mode switching request. In the present description, acquiring information denotes generating the information or receiving the information regardless of whether or not the information is the mode switching request. The mode switching request is one example of a "state change request to change the state of the vehicle."

For example, when the mode switching module 22 determines to switch the EV mode to the HEV mode, i.e., when the mode switching module 22 has acquired the mode switching request to switch the EV mode to the HEV mode, the mode switching module 22 changes the current control state from the control state for the EV mode to the engine start state, the rotational frequency synchronization control state, and the torque change control state in this order and finally to the control state for the HEV mode. Moreover, the mode switching module 22 generates (outputs) switching state information indicating the current control state.

Moreover, when the mode switching module 22 has changed the current control state from the control state for the EV mode to the engine start state, the mode switching module 22 transmits an engine start command value to the starter motor 10 to start the engine 2.

The mode switching module 22 includes a required torque determining module 22a. The required torque determining module 22a determines required torque that is torque required for the electric motor 3 and required torque that is torque required for the engine 2. The required torque of the electric motor 3 and the required torque of the engine 2 are determined in accordance with the current control state. Specifically, the required torque determining module 22a distributes the total required torque at a distribution ratio corresponding to the current control state to determine the required torque of the electric motor 3 and the required torque of the engine 2.

In the following description, the distribution ratio of the total required torque is defined as a ratio of torque required for the electric motor 3 to the total required torque. For example, in the present embodiment, since the clutch 5 is in the disengaged state in the EV mode, the electric motor 3 bears 100% of the total required torque. To be specific, the distribution ratio corresponding to the EV mode is 100%. Moreover, in a steady state in the HEV mode, the electric motor 3 merely generates torque to compensate for the shortage of the torque generated by the engine 2, and the engine 2 basically bears 100% of the total required torque. To be specific, the distribution ratio corresponding to the HEV mode is 0%.

As above, the distribution ratio is different between the EV mode and the HEV mode. Therefore, the torque required for the electric motor 3 and the torque required for the engine 2 are different from each other. In the following description, the distribution ratio corresponding to the EV mode is referred to as a "first distribution ratio," and the distribution ratio corresponding to the HEV mode is referred to as a "second distribution ratio."

Moreover, regarding each of the electric motor 3 and the engine 2, the torque required in the EV mode, in other words, a value obtained by distributing the total required torque at the first distribution ratio is referred to as "first required torque," and the torque required in the HEV mode, in other words, a value obtained by distributing the total required torque at the second distribution ratio is referred to as "second required torque." The first required torque is torque that is required for the traveling driving source immediately before a below-described torque change request is acquired. Moreover, the second required torque is torque required for the traveling driving source by the below-described torque change request.

The ratio of the torque required for the electric motor 3 to the total required torque in the HEV mode, i.e., the second distribution ratio is not limited to 0%. For example, the second distribution ratio may be a predetermined value smaller than 50%. The second distribution ratio may be a ratio indicating that regarding the torque to be output by the engine 2 and the electric motor 3 that are the traveling driving sources, the torque born by the engine 2 is larger than the torque born by the electric motor 3.

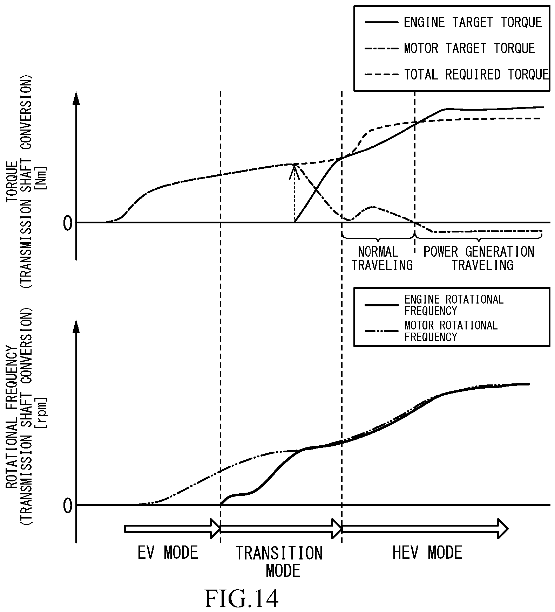

Moreover, the second distribution ratio may be a negative value (also see FIG. 14). For example, in the present embodiment, the HEV mode is the control state that is any one of a normal traveling state or a power generation traveling state. The second distribution ratio is different between the normal traveling state and the power generation traveling state. The second distribution ratio in the normal traveling state is 0% as described above. To be specific, in the normal traveling state, the engine 2 basically bears all the driving power necessary for the traveling. On the other hand, the second distribution ratio in the power generation traveling state is a negative value, such as -10%. In this case, a ratio of the torque required for the engine 2 to the total required torque is a value, such as 110%, which is not less than 100%. To be specific, in the power generation traveling state, the electric motor 3 is required to generate negative torque, and the engine 2 is required to generate the torque necessary for the traveling, and in addition, the torque that cancels the negative torque generated by the electric motor 3. Thus, in the power generation traveling state, the vehicle 1 travels while generating electric power by the electric motor 3.

For example, in the HEV mode, the mode switching module 22 selects the control state that is any one of the normal traveling state or the power generation traveling state. For example, the mode switching module 22 determines whether or not the SOC is not less than a predetermined value. When the SOC is not less than the predetermined value, the mode switching module 22 selects the normal traveling state. When the SOC is less than the predetermined value, the mode switching module 22 selects the power generation traveling state.

When the mode switching module 22 acquires the mode switching request to switch the EV mode to the HEV mode, each of the torque required as output torque of the electric motor 3 and the torque required as output torque of the engine 2 needs to be changed from the first required torque to the second required torque. Therefore, the mode switching request may also be called a torque change request to change the output torque of the traveling driving source from the first required torque to the second required torque. Moreover, the output torque of the traveling driving source is one example of "transmitted torque transmitted from the traveling driving source to the driving wheel," and the mode switching request is one example of the torque change request to change the transmitted torque transmitted from the traveling driving source to the driving wheel, from the first required torque to the second required torque.

In the present embodiment, when the mode switching module 22 acquires the mode switching request to switch the EV mode to the HEV mode, the torque change control of changing the torque output by the electric motor 3 and the torque output by the engine 2 is executed.

In the following description, the torque to be output by the electric motor 3 is called motor target torque. Moreover, the torque to be output by the engine 2 is called engine target torque. The mode switching module 22 outputs the motor target torque to the motor torque control module 23 and outputs the engine target torque to the engine torque control module 24. The motor target torque includes torque to be output by the electric motor 3 during below-described tailing control, and the engine target torque includes torque to be output by the engine 2 during the below-described tailing control. The motor target torque and the engine target torque are collectively called target torque.

The motor torque control module 23 transmits an inverter command value to (an inverter of) the electric motor 3 in accordance with the motor target torque output from the mode switching module 22 to drive the electric motor 3 such that output torque of the electric motor 3 becomes the motor target torque.

The engine torque control module 24 determines a target value of a throttle opening degree (hereinafter referred to as a "first throttle target opening degree") based on the engine target torque output from the mode switching module 22 and the engine rotational frequency.

Based on the engine rotational frequency and the motor rotational frequency, the engine rotational frequency control module 25 determines such a target value of the throttle opening degree (hereinafter referred to as a "second throttle target opening degree") that the engine rotational frequency synchronizes with the motor rotational frequency.

The throttle opening degree determining module 26 determines a final throttle opening degree command value to be output to the engine 2 and outputs it to throttle equipment 2a. Moreover, the control device 20 outputs a fuel injection signal corresponding to an actual measurement value of the throttle opening degree to an fuel injector 2b of the engine 2 and also outputs an engine ignition signal to an igniter 2c of the engine 2.

The clutch control module 27 outputs to the clutch actuator 6 a clutch pressure command value that changes the degree of engagement of the clutch 5.

### Switching from EV Mode to HEV Mode

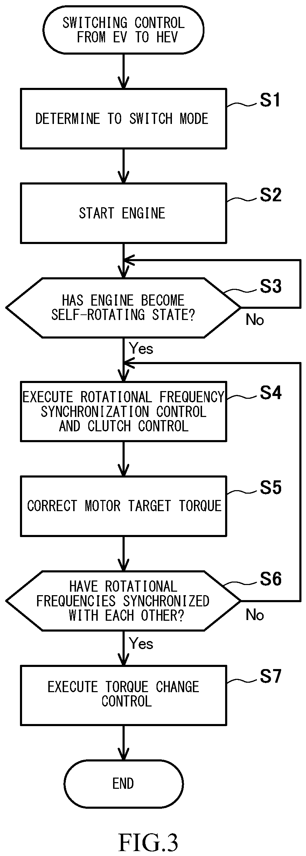

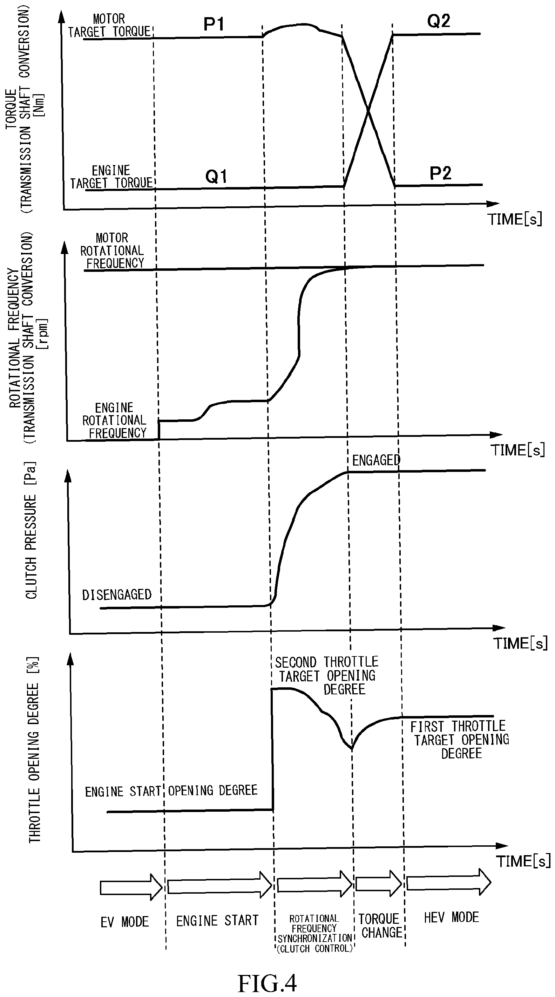

Hereinafter, the flow of processing of switching the traveling mode from the EV mode to the HEV mode will be described. FIG. 3 is a flowchart showing the flow of the processing of switching control from the EV mode to the HEV mode in the present embodiment. Moreover, FIG. 4 shows graphs of time changes of values in the switching control shown in FIG. 3. The following will describe the processing of the switching control when switching the EV mode to the HEV mode with the engine 2 in the stop state.

FIG. 4 shows a graph showing the target torque of the engine 2 and the target torque of the electric motor 3, a graph showing the rotational frequency of the engine 2 and the rotational frequency of the electric motor 3, a graph showing clutch pressure that is pressure by which the clutch actuator 6 is operated, and a graph showing the throttle opening degree, in this order from an upper side. In the graphs of FIG. 4, each target torque is a conversion value of the target torque at the transmission shaft (the input shaft 4a of the transmission 4), and each rotational frequency is a conversion value of the rotational frequency at the transmission shaft (the input shaft 4a of the transmission 4).

Moreover, in the graph of FIG. 4, the clutch pressure of the present embodiment is control hydraulic pressure. The clutch pressure is a parameter corresponding to the degree of engagement of the clutch 5, in other words, a parameter corresponding to the degree of transmission of the power between the engine 2 and the transmission 4. When the clutch pressure is preset minimum pressure (hereinafter referred to as "open corresponding pressure"), the degree of engagement of the clutch 5 is 0%, and the clutch 5 is in the disengaged state. Then, the degree of engagement increases as the clutch pressure increases from the open corresponding pressure. When the clutch pressure is preset maximum pressure (hereinafter referred to as "engagement corresponding pressure") or not less than the engagement corresponding pressure, the degree of engagement of the clutch 5 is 100%, and the clutch 5 is in the engaged state.

As described above, in the EV mode, the clutch 5 is in the disengaged state, and the driving wheel 8 is driven by the power generated by the electric motor 3. When the vehicle 1 is traveling in the EV mode, and the mode switching module 22 recognizes the current traveling state based on the total required torque and the like and determines that the HEV mode is the optimal traveling mode, the mode switching module 22 determines to switch the EV mode to the HEV mode (Step S 1). In other words, the mode switching module 22 determines based on various parameters whether or not a predetermined mode switching condition regarding the switching from the EV mode to the HEV mode has been satisfied, and when it is determined that the mode switching condition has been satisfied, the mode switching module 22 determines to switch the EV mode to the HEV mode. Switching from the EV mode to the HEV mode may be determined by manual operation of the rider.

### Engine Start

When switching from the EV mode to the HEV mode is determined, the mode switching module 22 changes the current control state from the control state for the EV mode to the engine start state. Then, the mode switching module 22 starts the engine 2 such that the engine 2 changes from the stop state to a self-rotating state in which the engine 2 rotates by itself (Step S2).

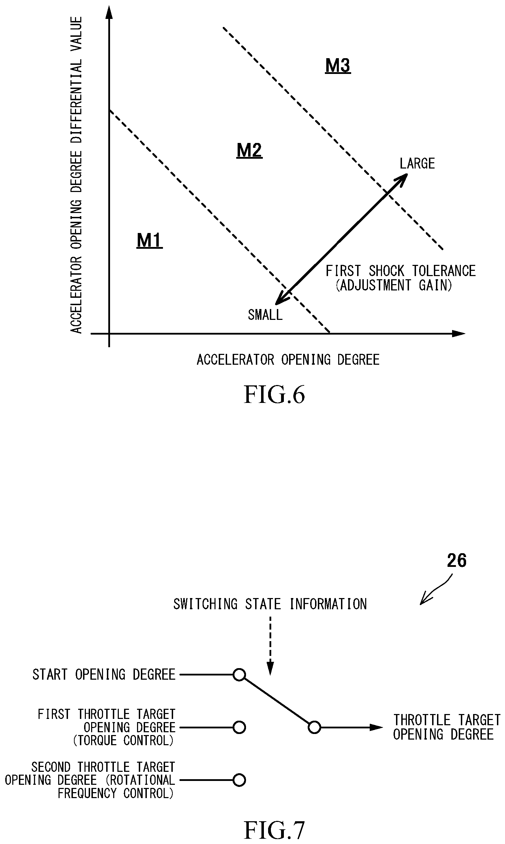

Specifically, the mode switching module 22 outputs the engine start command value to the starter motor 10 to start the engine 2 by the starter motor 10. Moreover, the mode switching module 22 transmits the switching state information indicating the engine start state to the throttle opening degree determining module 26. Based on the switching state information indicating the engine start state, the throttle opening degree determining module 26 outputs a throttle opening degree command value indicating a preset engine start opening degree to the throttle equipment 2a (also see FIG. 7 described later).

The mode switching module 22 determines whether or not the engine 2 has become the self-rotating state (Step S3). Specifically, the mode switching module 22 determines whether or not the engine rotational frequency has become a start reference value or more and whether or not a predetermined period of time has elapsed since the engine rotational frequency has become the start reference value or more. When the predetermined period of time has elapsed since the engine rotational frequency has become the start reference value or more (also see FIG. 4), the mode switching module 22 determines that the engine 2 has become the self-rotating state. When the engine rotational frequency has become the start reference value or more, the mode switching module 22 may determine that the engine 2 has become the self-rotating state.

While the engine 2 is not in the self-rotating state (No in Step S3), the mode switching module 22 continues to monitor the engine rotational frequency until the engine rotational frequency becomes the start reference value or more. When the mode switching module 22 determines that the engine 2 has become the self-rotating state (Yes in Step S3), the mode switching module 22 changes the current control state from the engine start state to the rotational frequency synchronization control state. Thus, the rotational frequency synchronization control state and clutch control are started (Step S4).

The rotational frequency synchronization control is control of making the rotational frequency of the input shaft (i.e., the transmission shaft) 4a which corresponds to the rotation of the engine 2 synchronize with the rotational frequency of the input shaft 4a which corresponds to the rotation of the electric motor 3. Moreover, the clutch control is control of switching the state of the clutch 5 from the disengaged state to the engaged state. Hereinafter, the rotational frequency synchronization control and the clutch control will be described in more detail.

### Rotational Frequency Synchronization Control

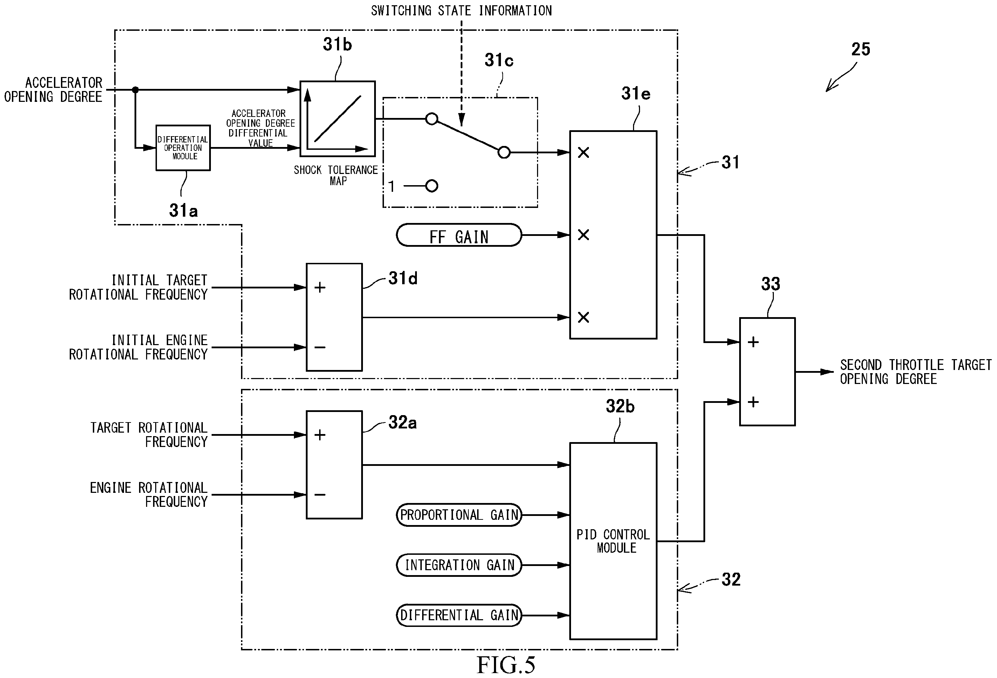

First, the rotational frequency synchronization control will be described with reference to FIGS. 5 to 7. FIG. 5 is a block diagram showing a function of setting the second throttle target opening degree in the engine rotational frequency control module 25. In the rotational frequency synchronization control, the control device 20 controls the engine 2 such that the rotational frequency of the input shaft (i.e., the transmission shaft) 4a which corresponds to the rotation of the engine 2 synchronizes with the rotational frequency of the input shaft 4a which corresponds to the rotation of the electric motor 3. Specifically, based on the engine rotational frequency and the motor rotational frequency, the engine rotational frequency control module 25 determines such second throttle target opening degree that the engine rotational frequency synchronizes with the motor rotational frequency. Then, the throttle opening degree determining module 26 determines the second throttle target opening degree as the final throttle opening degree command value to be output to the engine 2 and then outputs it to the throttle equipment 2a.

The engine rotational frequency control module 25 includes a feedforward control module (hereinafter, a FF control module) 31, a feedback control module (hereinafter, a FB control module) 32, and an adding module 33.

The FF control module 31 includes a differential operation module 31a, a shock tolerance setting module 31b, a switching module 31c, a subtracting module 31d, and a multiplying module 31e.

The differential operation module 31a performs differential operation of the accelerator opening degree and outputs an accelerator opening degree differential value. The shock tolerance setting module 3 1b refers to a preset first shock tolerance map and sets a first shock tolerance that is an adjustment gain from the accelerator opening degree and the accelerator opening degree differential value which is output by the differential operation module 31a.

Based on the switching state information acquired from the mode switching module 22, the switching module 31c switches whether to output the adjustment gain, which has been set by the shock tolerance setting module 31b, to the multiplying module 31e. When the switching state information acquired from the mode switching module 22 indicates the rotational frequency synchronization control state, the switching module 31c sets the gain to be output to the multiplying module 31e, to the adjustment gain. When the switching state information acquired from the mode switching module 22 indicates a state other than the rotational frequency synchronization control state, the switching module 31c sets the gain to be output to the multiplying module 31e, to "1."

The subtracting module 31d calculates a difference between an initial target rotational frequency and an initial engine rotational frequency. The initial target rotational frequency is a target rotational frequency of the engine 2 at the start of the rotational frequency synchronization control. For example, when the target rotational frequency of the engine 2 in the rotational frequency synchronization control is the rotational frequency of the electric motor 3, the initial target rotational frequency is the rotational frequency of the electric motor 3 at the start of the rotational frequency synchronization control. The initial engine rotational frequency is the rotational frequency of the engine 2 at the start of the rotational frequency synchronization control.

The multiplying module 31e multiplies the gain determined by the switching module 31c, a preset FF gain, and the difference between the initial target rotational frequency and the initial engine rotational frequency which has been calculated by the subtracting module 31d, and outputs a FF control value.

The FB control module 32 includes a subtracting module 32a and a PID control module 32b. The subtracting module 32a calculates a difference between the target rotational frequency of the engine 2 and the engine rotational frequency. The PID control module 32b determines a FB control value by PID control using a preset proportional gain, a preset integration gain, and a preset differential gain with respect to the difference calculated by the subtracting module 32a.

The adding module 33 adds the output value (FF control value) of the FF control module 31 and the output value (FB control value) of the FB control module 32 to set the second throttle target opening degree.

The following will describe differences between the rotational frequency synchronization control performed by the engine rotational frequency control module 25 and conventional rotational frequency synchronization control. As in PTL 1 described above, in the conventional rotational frequency synchronization control, feedback control is performed to make the engine rotational frequency synchronize with the motor rotational frequency. However, in the rotational frequency synchronization control of the present embodiment, the feedforward control is combined with the feedback control. To be specific, the subtracting module 31d adds the FF control value corresponding to the difference between the initial target rotational frequency and the initial engine rotational frequency to the output value of the FB control module 32, and thus, increases the second throttle target opening degree at the time of the execution of the rotational frequency synchronization control (see FIG. 4). Therefore, quick synchronization is realized.

However, when the throttle opening degree is excessively increased, the engine rotational frequency sharply increases. When the engine rotational frequency sharply increases, shock may be generated at the vehicle body. Moreover, such shock may cause uncomfortable feeling of the rider. Therefore, in the present embodiment, the shock tolerance setting module 31b determines the degree of shock that can be accepted by an occupant in a current situation (a traveling state, a driving operation state, etc.), and outputs the adjustment gain corresponding to the result of this determination.

In the present embodiment, as a parameter for determining the current situation (for example, the traveling state or the driving operation state), more specifically, as a parameter for determining the degree of shock that can be accepted by the occupant, the accelerator opening degree and the accelerator opening degree differential value are used.

FIG. 6 is a diagram showing the first shock tolerance map. A horizontal axis represents the accelerator opening degree, and a vertical axis represents the accelerator opening degree differential value. The first shock tolerance map shows a correspondence relation between the first shock tolerance and a combination of the accelerator opening degree and the accelerator opening degree differential value. The first shock tolerance corresponds to the adjustment gain set by the shock tolerance setting module 31b. The first shock tolerance is a parameter indicating a tolerance with respect to the shock generated at the vehicle body of the vehicle 1 when the throttle opening degree is sharply changed. The first shock tolerance is a value that is variably set based on an accelerating state or an accelerating operation state.

The large accelerator opening degree indicates a state where the rider is performing an accelerating operation. Moreover, the large accelerator opening degree indicates a state where the vehicle body is accelerating. Such state may be a state where the occupant (including a rider) can accept a certain degree of shock. Therefore, in the first shock tolerance map, the first shock tolerance is set so as to increase as the accelerator opening degree increases.

Moreover, the large accelerator opening degree differential value indicates a state where the rider is currently performing the accelerating operation. Furthermore, the large accelerator opening degree differential value indicates a state where the vehicle body has started accelerating. Such state may also be a state where the occupant (including the rider) can accept a certain degree of shock. Therefore, in the first shock tolerance map, the first shock tolerance is set so as to increase as the accelerator opening degree differential value increases.

In this first shock tolerance map, when a total value of the accelerator opening degree and the accelerator differential value (or a value obtained by multiplying the accelerator differential value by a predetermined value) is less than a predetermined first reference value, i.e., is in a first region M1, the first shock tolerance becomes a preset first set value. When the total value is not less than the first reference value and less than a predetermined second reference value larger than the first reference value, i.e., is in a second region M2, the first shock tolerance becomes a preset second set value larger than the first set value. When the total value is not more than a predetermined third reference value larger than the second reference value, i.e., is in a third region M3, the first shock tolerance becomes a preset third set value larger than the second set value.

To be specific, the first shock tolerance is relatively small in the first region M1 located at a lower-left portion in the first shock tolerance map, and the first shock tolerance is relatively large in the third region M3 located at an upper-right portion in the first shock tolerance map.

The first shock tolerance map shown in FIG. 6 shows that the combination of the accelerator opening degree and the accelerator opening degree differential value corresponds to any one of the three set values. However, this first shock tolerance map is merely one example. For example, the first shock tolerance map may show that the combination of the accelerator opening degree and the accelerator opening degree differential value corresponds to any one of two set values or any one of four or more set values.

FIG. 7 is a block diagram showing a function of determining the final throttle target opening degree in the throttle opening degree determining module 26.

Based on the switching state information acquired from the mode switching module 22, the throttle opening degree determining module 26 determines the final throttle opening degree to be output to the engine 2 from among a start opening degree, a first throttle opening degree, and a second throttle opening degree, and outputs it to the throttle equipment 2a. The first throttle opening degree is the throttle target opening degree output by the engine torque control module 24. The second throttle opening degree is the throttle target opening degree output by the engine rotational frequency control module 25.

For example, when the switching state information indicates the engine start state, the throttle opening degree determining module 26 determines the start opening degree as the final throttle target opening degree and outputs it. Moreover, for example, when the switching state information indicates the torque change control state, the throttle opening degree determining module 26 determines the first throttle opening degree as the final throttle target opening degree and outputs it.

Furthermore, for example, when the switching state information indicates the rotational frequency synchronization control state, the throttle opening degree determining module 26 determines the second throttle opening degree corresponding to the first shock tolerance as the final throttle target opening degree and outputs it. Therefore, during the rotational frequency synchronization control, the control device 20 increases the throttle opening degree of the the engine 2 as the first shock tolerance increases. As above, in the present embodiment, based on the traveling state or driving operation state of the vehicle 1, the control device 20 changes an initial target value of an output of the engine in rotation synchronization control, specifically, the throttle target opening degree at the start of the rotation synchronization control.

### Clutch Control

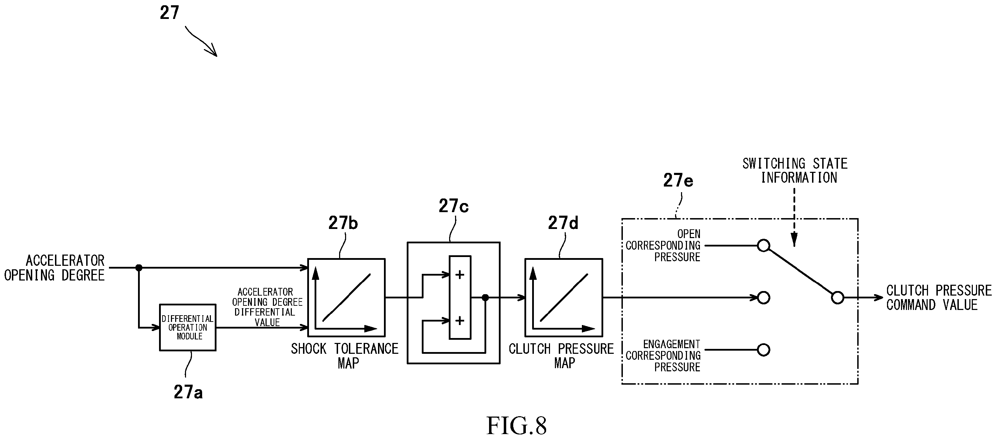

First, the rotational frequency synchronization control will be described with reference to FIGS. 8 to 10. FIG. 8 is a block diagram showing a function of determining the clutch pressure command value in the clutch control module 27.

The clutch control module 27 includes a differential operation module 27a, a shock tolerance setting module 27b, an integrating module 27c, a clutch pressure setting module 27d, and a clutch pressure determining module 27e.

The differential operation module 27a performs differential operation of the accelerator opening degree and outputs the accelerator opening degree differential value. The shock tolerance setting module 27b refers to a preset second shock tolerance map and sets a second shock tolerance that is a clutch pressure parameter, from the accelerator opening degree and the accelerator opening degree differential value which is output by the differential operation module 27a.

The integrating module 27c integrates the clutch pressure parameter output by the shock tolerance setting module 27b.

The clutch pressure setting module 27d refers to a preset clutch pressure map and determines the clutch pressure command value from the integrated value of the shock tolerance which is output by the integrating module 27c.

Based on the switching state information acquired from the mode switching module 22, the clutch pressure determining module 27e determines the final clutch pressure command value to be output to the clutch actuator 6 from among open corresponding pressure, engagement corresponding pressure, and clutch pressure which is set by the clutch pressure setting module 27d, and outputs it to the clutch actuator 6.

For example, when the switching state information indicates the EV mode or the engine start state, the clutch pressure determining module 27e determines the open corresponding pressure as the final clutch pressure command value to be output to the clutch actuator 6, and outputs it. Moreover, for example, when the switching state information indicates the torque change control state or the HEV mode, the clutch pressure determining module 27e determines the engagement corresponding pressure as the final clutch pressure command value to be output to the clutch actuator 6, and outputs it. Furthermore, for example, when the switching state information indicates the rotational frequency synchronization control state, the clutch pressure determining module 27e determines the clutch pressure set by the clutch pressure setting module 27d, as the final clutch pressure command value to be output to the clutch actuator 6, and outputs it.

The clutch control by the clutch pressure determining module 27e will be described in more detail. The clutch control in the present embodiment starts simultaneously with the rotational frequency synchronization control. Then, during the execution of the rotational frequency synchronization control, the clutch control module 27 controls the clutch 5 such that the clutch 5 becomes the half-engaged state. More specifically, during the execution of the rotational frequency synchronization control, the clutch control module 27 controls the clutch 5 (more specifically, the clutch actuator 6) such that the degree of engagement of the clutch 5 increases. During the execution of the rotational frequency synchronization control, the clutch control module 27 may gradually increase the degree of engagement of the clutch 5 with time or may stepwisely increase the degree of engagement of the clutch 5 with time. By setting the clutch 5 to the half-engaged state during the execution of the rotational frequency synchronization control, the frictional force of the clutch 5 is transmitted to the engine 2 so as to increase the engine rotational frequency, and as a result, quicker synchronization than when the engine rotational frequency is increased with the clutch 5 in the disengaged state is realized.

However, when the degree of engagement of the clutch 5 increases, shock may be generated at the vehicle body. Moreover, such shock may cause uncomfortable feeling of the rider. Therefore, in the present embodiment, the shock tolerance setting module 27b determines the degree of shock that can be accepted by the occupant in the current situation (the traveling state, the driving operation state, etc.), and adjusts speed of increasing the degree of engagement of the clutch 5 in accordance with the result of this determination.

In the present embodiment, as a parameter for determining the current situation (for example, the traveling state or the driving operation state), more specifically, as a parameter for determining the degree of shock that can be accepted by the occupant, the accelerator opening degree and the accelerator opening degree differential value are used.

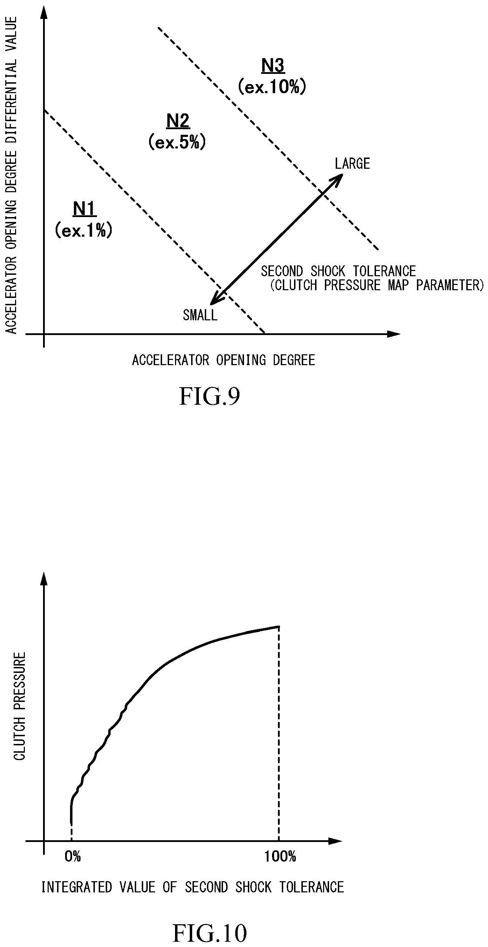

FIG. 9 is a diagram showing the second shock tolerance map. A horizontal axis represents the accelerator opening degree, and a vertical axis represents the accelerator opening degree differential value. The second shock tolerance map shows a correspondence relation between the second shock tolerance and a combination of the accelerator opening degree and the accelerator opening degree differential value. Since the second shock tolerance is a parameter used by the clutch pressure setting module 27d, it may also be called the clutch pressure parameter. The second shock tolerance is a parameter indicating a tolerance with respect to the shock generated at the vehicle body of the vehicle 1 when the state of the clutch 5 is changed. The second shock tolerance is a value that is variably set based on the accelerating state or the accelerating operation state.

The large accelerator opening degree indicates a state where the rider is performing the accelerating operation. Moreover, the large accelerator opening degree indicates a state where the vehicle body is accelerating. Such state may be a state where the occupant (including a rider) can accept a certain degree of shock. Therefore, in the second shock tolerance map, the second shock tolerance is set so as to increase as the accelerator opening degree increases.

Moreover, the large accelerator opening degree differential value indicates a state where the rider is currently performing the accelerating operation. Furthermore, the large accelerator opening degree differential value indicates a state where the vehicle body has started accelerating. Such state may also be a state where the occupant (including the rider) can accept a certain degree of shock. Therefore, in the second shock tolerance map, the second shock tolerance is set so as to increase as the accelerator opening degree differential value increases.

In this second shock tolerance map, when a total value of the accelerator opening degree and the accelerator differential value (or a value obtained by multiplying the accelerator differential value by a predetermined value) is less than a predetermined first reference value, i.e., is in a first region N1, the second shock tolerance becomes a preset first parameter value. When the total value is not less than the first reference value and less than a predetermined second reference value larger than the first reference value, i.e., is in a second region N2, the second shock tolerance becomes a preset second parameter value larger than the first parameter value. When the total value is not more than a predetermined third reference value larger than the second reference value, i.e., is in a third region N3, the second shock tolerance becomes a preset third parameter value larger than the second parameter value.

To be specific, the first shock tolerance corresponding to the first region N1 located at a lower-left portion in the second shock tolerance map is relatively small, and the second shock tolerance corresponding to the third region N3 located at an upper-right portion in the second shock tolerance map is relatively large. In the present embodiment, the first shock tolerance (first parameter value) corresponding to the first region N1 is 1%, the first shock tolerance (second parameter value) corresponding to the second region N2 is 5%, and the first shock tolerance (third parameter value) corresponding to the third region N3 is 10%.

The second shock tolerance map shown in FIG. 9 shows that the combination of the accelerator opening degree and the accelerator opening degree differential value corresponds to any one of the three parameter values. However, this second shock tolerance map is merely one example. For example, the second shock tolerance map may show that the combination of the accelerator opening degree and the accelerator opening degree differential value corresponds to any one of two parameter values or any one of four or more parameter values.

FIG. 10 is a diagram showing the clutch pressure map. A horizontal axis represents the integrated value of the clutch pressure parameter which is output by the integrating module 27c, i.e., the integrated value of the second shock tolerance. A vertical axis represents the clutch pressure (command value).

The clutch pressure map shows a correspondence relation between the integrated value of the second shock tolerance and the clutch pressure. When the integrated value of the second shock tolerance is 0%, the clutch pressure is preset minimum pressure, i.e., the above open corresponding pressure, and the clutch 5 is in the disengaged state. When the integrated value of the second shock tolerance is 100%, the clutch pressure is preset maximum pressure, i.e., the above engagement corresponding pressure, and the clutch 5 is in the engaged state.

Each time the second shock tolerance (clutch pressure parameter) is output from the shock tolerance setting module 27b, the integrated value of the second shock tolerance increases from 0% toward 100%. Moreover, as shown in FIG. 10, in the clutch pressure map, the clutch pressure increases as the integrated value of the second shock tolerance increases. Therefore, as the second shock tolerance (clutch pressure parameter) output from the shock tolerance setting module 27b increases, the integrated value of the second shock tolerance quickly increases, and as a result, the clutch pressure (in other words, the degree of engagement of the clutch 5) quickly increases.

As above, based on the traveling state or driving operation state of the vehicle 1, the control device 20 changes a time required to change the clutch 5 from the disengaged state to the engaged state. In the clutch control of the present embodiment, when the second shock tolerance is large, the degree of engagement of the clutch 5 is quickly increased. Moreover, when the second shock tolerance is small, the degree of engagement of the clutch 5 is gently increased. In other words, as the second shock tolerance increases, the control device 20 reduces a half-engaged time that is a time from when the clutch 5 is set to the half-engaged state until when the clutch is set to the engaged state.

In the example of FIG. 4, the half-engaged time that is the time from when the clutch 5 is set to the half-engaged state until when the clutch is set to the engaged state corresponds to a time from the start of the clutch control until the end of the clutch control. However, the half-engaged time is not limited to this. For example, when the clutch pressure is close to the open corresponding pressure, and the degree of engagement of the clutch 5 does not increase, a start point of the half-engaged time may be a time point slightly after the start time point of the clutch control.

Calculations of the modules during the clutch control are executed at predetermined time intervals. Moreover, all the second shock tolerances (in the present embodiment, the first parameter value, the second parameter value, and the third parameter value) obtained from the second shock tolerance map are positive values. Therefore, each time the clutch control module 27 performs calculation, the integrated value of the second shock tolerance which is integrated by the integrating module 27c increases. Thus, during the execution of the rotational frequency synchronization control, the control device 20 controls the clutch 5 (more specifically, the clutch actuator 6) such that the degree of engagement of the clutch 5 increases with time. The minimum value of the second shock tolerance obtained from the second shock tolerance map may be zero. For example, the first parameter value may be zero.

Referring back to FIG. 3, during the clutch control, the mode switching module 22 corrects the motor target torque such that the decrease in the motor rotational frequency by the increase in the degree of engagement of the clutch 5 is suppressed (Step S5). During the clutch control, the mode switching module 22 corrects the motor target torque in such a manner that loss torque generated at the electric motor 3 in accordance with the degree of engagement of the clutch 5 is added to the required torque of the electric motor 3.

The mode switching module 22 determines whether or not a transmission shaft rotational frequency corresponding to the rotation of the engine 2 has synchronized with a transmission shaft rotational frequency corresponding to the rotation of the electric motor 3 (Step S6). Specifically, the mode switching module 22 determines whether or not a difference between a transmission shaft conversion value of the engine rotational frequency and a transmission shaft conversion value of the motor rotational frequency is a predetermined synchronization reference value or less.

In the present embodiment, a case where the rotational frequency synchronization control and the clutch control simultaneously proceed, and the clutch pressure has become the engagement corresponding pressure by the clutch control denotes that the transmission shaft rotational frequency corresponding to the rotation of the engine 2 has synchronized with the transmission shaft rotational frequency corresponding to the rotation of the electric motor 3. Therefore, the mode switching module 22 may determine whether or not the clutch pressure has become the engagement corresponding pressure, to determine whether or not the transmission shaft rotational frequency corresponding to the rotation of the engine 2 has synchronized with the transmission shaft rotational frequency corresponding to the rotation of the electric motor 3.

When it is not determined that the transmission shaft rotational frequency corresponding to the rotation of the engine 2 has synchronized with the transmission shaft rotational frequency corresponding to the rotation of the electric motor 3 (No in Step S6), the rotational frequency synchronization control and the clutch control continue. When it is determined that the transmission shaft rotational frequency corresponding to the rotation of the engine 2 has synchronized with the transmission shaft rotational frequency corresponding to the rotation of the electric motor 3 (Yes in Step S6), the mode switching module 22 changes the current control state from the rotational frequency synchronization control state to the torque change control state (Step S7).

### Torque Change Control

In the torque change control, the target torque of the traveling driving source is changed from the first required torque corresponding to the EV mode to the second required torque corresponding to the HEV mode. Specifically, in the torque change control, the engine target torque is changed from first required torque P1 corresponding to the EV mode to second required torque P2 corresponding to the HEV mode, and the motor target torque is changed from first required torque Q1 corresponding to the EV mode to second required torque Q2 corresponding to the HEV mode.

To complete the switching from the EV mode to the HEV mode as quickly as possible, it is desirable that a time required for the torque change control be reduced. However, if the output of the traveling driving source is sharply changed to reduce the time required for the torque change control, this may cause shock at the vehicle body. Moreover, such shock may cause uncomfortable feeling of the rider. Therefore, in the present embodiment, a third shock tolerance is acquired as a parameter indicating the degree of shock that can be accepted by the occupant, and the time required for the torque change control (below-described torque change time) is changed in accordance with the third shock tolerance.

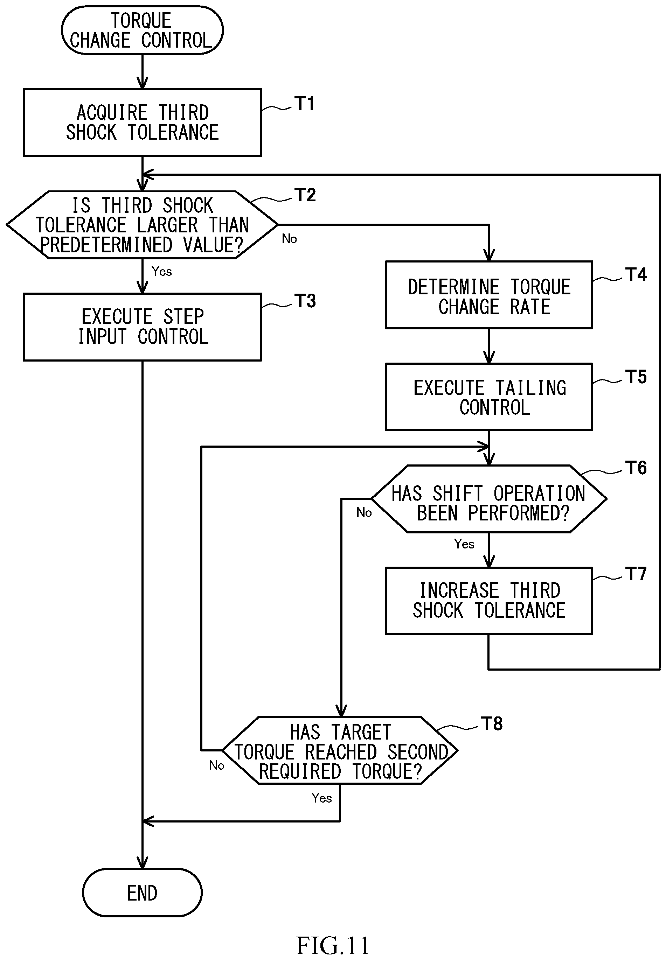

The torque change control will be described with reference to FIGS. 11 to 13. FIG. 11 is a flowchart showing the flow of the torque change control processing. In the torque change control processing, first, the mode switching module 22 acquires the third shock tolerance (Step T1).

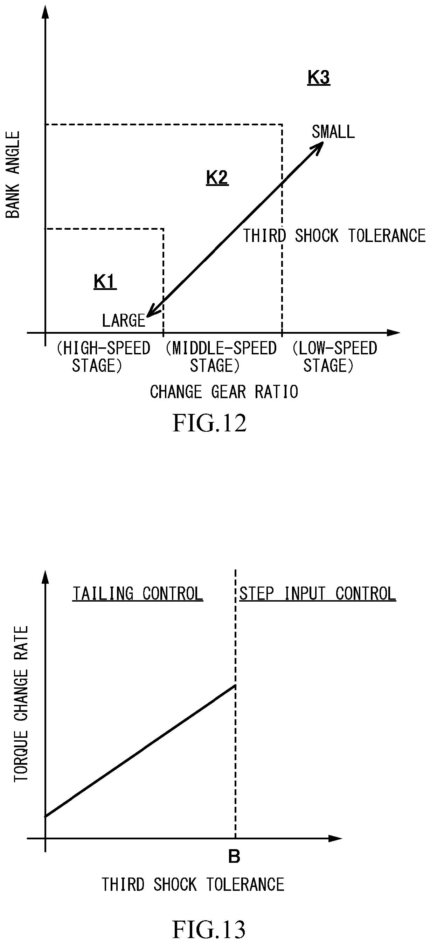

FIG. 12 is a diagram showing a third shock tolerance map. A horizontal axis represents the change gear ratio of the transmission 4, and a vertical axis represents the bank angle. For example, change gear ratio information indicating the change gear ratio of the transmission 4 is detected by the change gear ratio sensor. Moreover, for example, bank angle information indicating the bank angle of the vehicle body is detected by the gyro sensor. The third shock tolerance map shows a correspondence relation between the third shock tolerance and a combination of the change gear ratio and the bank angle. The third shock tolerance is a parameter indicating a tolerance with respect to the shock generated at the vehicle body of the vehicle 1 when the target torque is sharply changed. In the present embodiment, the third shock tolerance is generated as a value that is variably set by the change gear ratio and the bank angle.

There is a high possibility that the shock that may be generated at the vehicle body by changing the torque when the change gear ratio of the transmission 4 is large becomes larger than the shock that may be generated when the change gear ratio is small. For example, there is a high possibility that when the transmission is a manual transmission, the shock that may be generated at the vehicle body by changing the torque when the gear stage is a low-speed stage, such as a first gear stage or a second gear stage, or a middle-speed stage, such as a third gear stage or a fourth gear stage becomes larger than the shock that may be generated when the gear stage is a high-speed stage, such as a fifth gear stage or a sixth gear stage. This is because as the change gear ratio of the transmission 4 increases, the torque transmitted from the input shaft 4a of the transmission 4 to the output shaft 4b tends to increase. Therefore, it is desirable that as the change gear ratio of the transmission 4 increases, the shock generated at the vehicle body be reduced.

Therefore, in the present embodiment, in the third shock tolerance map, the third shock tolerance is set so as to decrease as the change gear ratio increases. In other words, the third shock tolerance determined when the change gear ratio of the transmission 4 is larger than, for example, a set change gear ratio becomes smaller than the third shock tolerance determined when the change gear ratio of the transmission 4 is not larger than the set change gear ratio. For example, the third shock tolerance determined when the gear stage is the middle-speed stage or the low-speed stage whose change gear ratio is larger than the change gear ratio corresponding to the fourth gear stage becomes smaller than the third shock tolerance determined when the gear stage is the high-speed stage whose change gear ratio is not larger than the change gear ratio corresponding to the fourth gear stage.

That the bank angle is not zero may indicate that the vehicle 1 is traveling while inclining the vehicle body, for example, that the vehicle 1 is traveling on a curved road. Moreover, that the bank angle is small may indicate that the vehicle 1 is traveling on a relatively gently curved road. Furthermore, that the bank angle is large may indicate that the vehicle 1 is traveling on a sharply curved road. Therefore, it is desirable that the shock generated at the vehicle body decrease as the bank angle increases. In other words, when the bank angle is small, the occupant (including the rider) may be able to accept a certain degree of shock. Therefore, in the third shock tolerance map, the third shock tolerance is set so as to decrease as the bank angle increases.

This third shock tolerance map shows three regions, i.e., a first region K1, a second region K2, and a third region K3 each of which is associated with a combination of the change gear ratio and the bank angle. The third shock tolerance is preset in each of the first region K1, the second region K2, and the third region K3. The third shock tolerance is relatively large in the first region K1 located at a lower-left portion in the third shock tolerance map, and the third shock tolerance is relatively small in the third region K3 located at an upper-right portion in the third shock tolerance map. For example, according to the third shock tolerance map, when the vehicle body is not in an inclined state, the third shock tolerance acquired at the time of the high-speed stage (such as the fifth gear stage or the sixth gear stage) tends to be larger than the third shock tolerance acquired at the time of the middle-speed stage (such as the third gear stage or the fourth gear stage) or the low-speed stage (such as the first gear stage or the second gear stage).

The third shock tolerance map shown in FIG. 12 shows that the combination of the change gear ratio and the bank angle corresponds to any one of three set values. However, this third shock tolerance map is merely one example. For example, the third shock tolerance map may show that the combination of the change gear ratio and the bank angle corresponds to any one of two values or any one of four or more values.

Referring back to FIG. 11, the mode switching module 22 determines whether or not the acquired third shock tolerance is larger than a predetermined value (Step T2). When it is determined that the acquired third shock tolerance is larger than a predetermined value B (Yes in Step T2), the mode switching module 22 executes step input control (Step T3).

The step input control is control in which each of the torque output by the electric motor 3 and the torque output by the engine 2 is stepwisely changed from the current target torque (for example, the first required torque) to the second required torque. To be specific, the step input control is control that minimizes the time required for the torque change control, i.e., the torque change time in which the target torque is changed from the first required torque to the second required torque.

When the mode switching module 22 determines that the acquired third shock tolerance is not more than the predetermined value B (No in Step T2), the mode switching module 22 determines a torque change rate in accordance with the third shock tolerance (Step T4). The tailing control based on the determined torque change rate is executed by the mode switching module 22, the motor torque control module 23, and the engine torque control module 24 (Step T5).

The tailing control is control in which each of the torque output by the electric motor 3 and the torque output by the engine 2 is gradually changed from the first required torque to the second required torque in the predetermined torque change time. In other words, the tailing control is control in which the distribution ratio of the total required torque is gradually changed from the first distribution ratio to the second distribution ratio in the torque change time. The uppermost graph in FIG. 4 shows an example in which the motor target torque and the engine target torque are changed by the tailing control.

FIG. 13 is a diagram showing a torque change rate map. The torque change rate is the amount of change of the target torque per unit time. For example, the torque change rate corresponds to an absolute value of an inclination of the target torque of the engine 2 or the electric motor 3 in the uppermost graph in FIG. 4. To be specific, the torque change time required to change each of the torque output by the electric motor 3 and the torque output by the engine 2 from the first required torque to the second required torque is a time corresponding to the difference between the first required torque and the second required torque and the torque change rate. In a range of not more than the value B in FIG. 13, the torque change rate increases as the third shock tolerance increases. Thus, the mode switching module 22 executes the tailing control such that as the third shock tolerance determined in Step T1 increases, the torque change time decreases.

Referring back to FIG. 11, during the execution of the tailing control, the mode switching module 22 determines whether or not the shift operation has been performed by the rider (Step T6). For example, shift operation information indicating that the shift operation of the rider has been performed is received from the shift operation sensor. Instead of this, the shift operation information may be acquired by determining whether or not the gear stage detected by the gear position sensor that is the change gear ratio sensor has been changed.

When the mode switching module 22 determines during the execution of the tailing control that the shift operation has been performed by the rider (Yes in Step T6), the mode switching module 22 increases the third shock tolerance (Step T7) and returns to Step T2. The amount of increase of the third shock tolerance that is increased in Step T7 may be a predetermined fixed value or may be a variable corresponding to the gear stage before or after the change.

As above, the third shock tolerance is increased when the shift operation has been performed. This is because when the rider performs the shift operation, normally, the occupant can accept the shock generated at the vehicle body. When the mode switching module 22 determines in Step T6 that the shift operation has been performed by the rider, the mode switching module 22 may proceed to the step input control in Step T3 instead of increasing the third shock tolerance. To be specific, when the shift operation has been performed during the execution of the tailing control, the tailing control may be stopped, and the current target torque may be stepwisely changed to the second required torque. To be specific, the torque change control is executed such that the torque change time when the shift operation information has been acquired during the execution of the torque change control becomes shorter than the torque change time when the shift operation information has not been acquired.

When it is determined that the shift operation of the rider has not been performed during the execution of the tailing control (No in Step T6), the mode switching module 22 determines whether or not the target torque has reached the second required torque by the tailing control (Step T8). When the mode switching module 22 determines that the target torque has not reached the second required torque (No in Step T8), the mode switching module 22 returns to Step T6 and continues the tailing control. When the mode switching module 22 determines that the target torque has reached the second required torque (Yes in Step T8), the mode switching module 22 terminates the transition mode, and thus, the change to the HEV mode is completed.

The example of FIG. 4 shows that each target torque linearly changes during the torque change control. However, each target torque may non-linearly change. To be specific, during the execution of the tailing control, the torque change rate does not have to be constant and may change.

As described above, according to the present embodiment, the third shock tolerance indicating the tolerance with respect to the shock generated at the vehicle body is determined, and the torque change time is changed in accordance with the third shock tolerance.

For example, the step input control or the tailing control is selected as the torque change control in accordance with whether or not the third shock tolerance is larger than the predetermined value B. Moreover, for example, the tailing control is executed such that the torque change time decreases as the third shock tolerance increases.

As above, when the occupant cannot accept the shock generated at the vehicle body when the torque is changed, the shock generated at the vehicle body can be suppressed by increasing the torque change time. Moreover, when the occupant can accept the shock generated at the vehicle body when the torque is changed, the torque change time can be reduced.

Therefore, while suppressing uncomfortable feeling of the occupant which is caused by changing the torque for driving the driving wheel 8, the time required to change the torque can be reduced.

For example, a region where the output of the engine 2 is low is a region where the fuel efficiency of the engine 2 is low. Therefore, by reducing the time required for the tailing control, a use time of the engine 2 in the region where the fuel efficiency is low can be reduced as much as possible. Moreover, for example, by reducing the time required for the tailing control, the amount of electric power used by the electric motor 3 during the tailing control can be reduced.

Moreover, according to the present embodiment, the third shock tolerance determined by the processing circuitry when the change gear ratio of the transmission 4 is larger than the set change gear ratio is smaller than the third shock tolerance determined by the processing circuitry when the change gear ratio of the transmission is not larger than the set change gear ratio. Therefore, the torque change time can be adjusted such that the shock that may be generated at the vehicle body when the change gear ratio is relatively low is suppressed.

Moreover, according to the present embodiment, the third shock tolerance is set to a value that decreases as the bank angle increases. Therefore, the torque change time can be adjusted so as to be suitable for the bank state of the vehicle body.

Moreover, according to the present embodiment, the third shock tolerance is determined based on the bank angle information and the change gear ratio information. Therefore, the torque change time can be adjusted so as to be suitable for both of the bank state of the vehicle body and the change gear ratio of the transmission.

Moreover, according to the present embodiment, when the information indicating that the shift operation of the rider has been performed is acquired during the execution of the tailing control, the third shock tolerance is increased. Therefore, at the time of the shift operation in which it is assumed that the occupant can accept the shock generated at the vehicle body, the torque change time can be reduced.

Moreover, according to the present embodiment, when the determined third shock tolerance is not larger than a predetermined value, the tailing control is executed. When the determined third shock tolerance is larger than the predetermined value, the step input control in which the torque output by the traveling driving source is stepwisely changed from the first required torque to the second required torque is executed without executing the tailing control. Therefore, when the occupant can accept the shock generated at the vehicle body, the time required to change the torque can be further reduced.

Moreover, according to the present embodiment, during the execution of the rotational frequency synchronization control, the degree of engagement of the clutch 5 is increased, and the clutch 5 becomes the half-engaged state. Therefore, the rotation of the transmission shaft is transmitted to the engine 2 so as to increase the rotational frequency of the engine 2. Thus, a time required for the rotational frequency synchronization control can be made shorter than that when the rotational frequency of the engine 2 is increased by controlling only the engine 2, for example, by controlling the throttle opening degree. As a result, a time required to change the traveling mode from the first traveling mode to the second traveling mode can be reduced.

Moreover, according to the present embodiment, the clutch control is executed during the execution of the rotational frequency synchronization control. To be specific, while the engine rotational frequency is increasing so as to approach the motor rotational frequency, the engagement of the clutch 5 is also performed. Therefore, the shock generated by the engagement of the clutch 5 can be made smaller than when performing the engagement of the clutch 5 with the engine 2 in the stop state (for example, when performing push starting).

Moreover, according to the present embodiment, as the second shock tolerance increases, the half-engaged time that is a time from when the clutch is set to the half-engaged state until when the clutch 5 is set to the engaged state is reduced. Therefore, since the half-engaged time is reduced as the second shock tolerance increases, the half-engaged time can be appropriately changed in accordance with whether or not the occupant can accept the shock.

Moreover, according to the present embodiment, the second shock tolerance may increase as the accelerator opening degree increases. When the occupant operates to increase the accelerator, the occupant supposes the generation of the shock by the operation of the clutch and therefore may be able to accept the shock. According to the present embodiment, the second shock tolerance is set as a value that increases as the accelerator opening degree increases. Thus, the half-engaged time can be appropriately changed.

Moreover, according to the present embodiment, as the first shock tolerance increases, the throttle opening degree of the engine 2 is increased. Thus, the time required for the rotational frequency synchronization control can be reduced, and as a result, the clutch 5 can be more quickly set to the engaged state.

Moreover, according to the present embodiment, during the execution of the rotational frequency synchronization control, the clutch is controlled such that the degree of engagement of the clutch 5 increases with time. Therefore, the shock generated at the vehicle body when the state of the clutch 5 is changed is made smaller than that when the state of the clutch 5 is suddenly changed.

### Other Embodiments

The present disclosure is not limited to the above embodiment. Modifications, additions, and eliminations may be made with respect to the configuration of the embodiment.

For example, the vehicle described in the above embodiment is a hybrid vehicle including two traveling driving sources. However, the vehicle is not limited to this. For example, the vehicle may include only one traveling driving source or may include three or more traveling driving sources. For example, the vehicle may include only an internal combustion engine as the traveling driving source.

For example, the vehicle may include only an internal combustion engine as the traveling driving source. Moreover, the vehicle may include only an electric motor as the traveling driving source. The first required torque and the second required torque do not have to be values obtained by distributing the total required torque at the distribution ratio. The first required torque may be torque required for the traveling driving source before the torque change request is acquired, and the second required torque may be torque required for the traveling driving source by the torque change request.

The transmission performs gear change in mechanical association with the shift operation of the rider with respect to the shift operation element. However, the transmission may perform the gear change in electric association with the shift operation of the rider with respect to the shift operation element. In this case, for example, the shift operation element may be a shift switch located at a grip of a handlebar of the vehicle 1, and the control device may control a gear shifter that selects a pair of transmission gears from the transmission gear pairs based on the shift operation detected by the shift switch. For example, the gear shifter includes: a shift drum including a guide groove; a shift fork which includes one end portion fitted to the guide groove and the other end portion connected to a dog gear and moves along the input shaft of the transmission by the rotation of the shift drum; and a shift actuator that is controlled by the control device to rotate the shift drum.

Moreover, in the above embodiment, the mode switching request to switch the EV mode to the HEV mode is described as one example of the torque change request to change the required torque required for the traveling driving source from the first required torque to the second required torque. However, the torque change request is not limited to this. The torque change request may be the mode switching request to switch the HEV mode to the EV mode. For example, the torque change request may be the mode switching request to switch between the normal traveling state and the power generation traveling state in the HEV mode.

For example, when the transmission is configured to perform the gear change in electric association with the shift operation of the rider with respect to the shift operation element, the control device may change, at the time of the control of the gear change, the torque required for the engine as the traveling driving source in order to reduce the shock generated at the vehicle body when the gear change is performed. Such control may be performed regardless of whether the vehicle is a hybrid vehicle or an engine vehicle including only an internal combustion engine as the traveling driving source. A command that changes the required torque required for the engine in the control of such gear change may also be included in the torque change request.

Moreover, the vehicle including the clutch between the internal combustion engine and the transmission may perform control in which: when the shift operation is performed by the rider, the clutch is once changed from the engaged state to the disengaged state or the half-engaged state; then, the gear stage is changed, i.e., the gear change is performed; and then, the clutch returns to the engaged state. At the time of such control, the torque required for the engine that is the traveling driving source may be changed. Such control is performed regardless of whether the vehicle is a hybrid vehicle or an engine vehicle including only an internal combustion engine as the traveling driving source. A command that changes the required torque required for the engine in the control of such gear change may be included in the torque change request.

A processing method of the torque change control is not limited to that described in the above embodiment. For example, in the above embodiment, whether to execute the step input control or the tailing control as the torque change control is determined based on whether or not the third shock tolerance is larger than the predetermined value B in Step T2. However, in the torque change control, only the tailing control may be executed without executing the step input control. In this case, in the torque change control shown in FIG. 11, Steps T2 and T3 may be omitted, and Step T4 is performed after Step T1.

Moreover, for example, in the above embodiment, the torque change rate is determined in accordance with the third shock tolerance in Step T4. However, the torque change rate may be a predetermined value that does not depend on the third shock tolerance. In this case, in the torque change control of FIG. 11, Step T4 may be omitted, and after it is determined in Step T2 that the third shock tolerance is not more than the predetermined value B, Step T5 is performed.

Moreover, for example, in the above embodiment, the third shock tolerance is described as a parameter that decreases as the change gear ratio increases and that decreases as the bank angle increases. However, the third shock tolerance is not limited to this.

The third shock tolerance may be a parameter that increases as the change gear ratio or the bank angle increases. In addition to or instead of that the third shock tolerance increases as the change gear ratio or the bank angle increases, the third shock tolerance may be associated with another parameter. As with the first shock tolerance and the second shock tolerance, the third shock tolerance may change based on the combination of the accelerator opening degree and the accelerator opening degree differential value or may change based on the accelerator opening degree or the accelerator opening degree differential value. The third shock tolerance may be a value that is variably set based on the traveling state, such as the accelerating state, or the driving operation state. Examples of the parameter indicating the traveling state or the driving operation state may include the accelerator opening degree, the bank angle, the vehicle speed, the gear stage, and the traveling position of the vehicle.

For example, the third shock tolerance may be set in accordance with the control state that controls the traveling driving source. For example, when the control device is configured to selectively execute normal control in which the maximum value of the output of the traveling driving source is set and boost control in which the maximum value of the output of the traveling driving source which is larger than the maximum value in the normal control is set, the third shock tolerance determined in the boost control may be determined to be larger than the third shock tolerance determined in the normal control. According to this configuration, at the time of the boost control in which it is assumed that the occupant can accept the shock generated at the vehicle body, the torque change time can be reduced.

Moreover, for example, in the above embodiment, each of the first shock tolerance and the second shock tolerance is a parameter that increases as the accelerator opening degree increases and that increases as the accelerator opening degree differential value increases. However, each of the first shock tolerance and the second shock tolerance is not limited to this.

Each of the first shock tolerance and the second shock tolerance may be a parameter that increases as at least one of the accelerator opening degree or the accelerator opening degree differential value increases. In addition to or instead of that each of the first shock tolerance and the second shock tolerance increases as at least one of the accelerator opening degree or the accelerator opening degree differential value increases, each of the first shock tolerance and the second shock tolerance may be associated with another parameter. Each of the first shock tolerance and the second shock tolerance may be a value that is variably set based on the traveling state or the driving operation state, except for the accelerating state. To be specific, each of the first shock tolerance and the second shock tolerance may be a value that is associated with a parameter indicating the traveling state or the driving operation state, except for the accelerator opening degree and the accelerator opening degree differential value. Examples of the parameter indicating the traveling state or the driving operation state may include the accelerator opening degree, the bank angle, the vehicle speed, the gear stage, and the traveling position of the vehicle.

For example, that the hybrid vehicle is in the accelerating operation state may be detected by a parameter other than the accelerator opening degree, for example, by a change in the vehicle speed, and each of the first shock tolerance and the second shock tolerance may be a value that increases as the change in the vehicle speed increases.

For example, it is desirable to reduce the shock generated at the vehicle body when the hybrid vehicle is traveling while inclining the vehicle body (for example, when the hybrid vehicle is traveling on a curved road). Therefore, each of the first shock tolerance and the second shock tolerance may be a value that decreases as the bank angle increases.

For example, it is desirable that the shock generated at the vehicle body decrease as the vehicle speed of the hybrid vehicle increases. Therefore, each of the first shock tolerance and the second shock tolerance may be a value that decreases as the vehicle speed increases.

For example, each of the first shock tolerance and the second shock tolerance may be a value that is associated with the gear stage. For example, the shock generated when the gear stage of the hybrid vehicle is a low-speed or middle-speed stage (for example, first to fourth gear stages) is larger than the shock generated when the gear stage of the hybrid vehicle is a high-speed stage (for example, fifth and sixth gear stages). Therefore, it is desirable to suppress the shock when the gear stage is the low-speed or middle-speed stage. Thus, the shock tolerance at the low-speed or middle-speed stage may be a value smaller than the shock tolerance at the high-speed stage. Moreover, the shock tolerance during continuous shift-up or continuous shift-down may be a value larger than the shock tolerance not during continuous shift-up or continuous shift-down.

Each of the first shock tolerance, the second shock tolerance, and the third shock tolerance may be a value that changes in accordance with the traveling position of the hybrid vehicle or the state of the traveling road surface. For example, while the hybrid vehicle is traveling on an expressway, it is desirable to suppress the shock generated at the vehicle body of the hybrid vehicle. Therefore, the shock tolerance while the hybrid vehicle is traveling on the expressway may be smaller than that while the hybrid vehicle is traveling on a normal road. Moreover, for example, while the hybrid vehicle is traveling on a gravel road, the vehicle body of the hybrid vehicle is vibrating due to the influence of gravel. Therefore, even when the shock is generated at the vehicle body by the increase in the throttle opening degree or the engagement of the clutch, the occupant may be able to accept such shock. Thus, the shock tolerance while the hybrid vehicle is traveling on the gravel road may be larger than the shock tolerance while the hybrid vehicle is traveling on the normal road. The traveling position of the hybrid vehicle can be detected by, for example, a GPS device mounted on the vehicle body.

For example, the degree of vibration of the vehicle body during traveling may be detected by a vibration sensor mounted on the vehicle body, and each of the first shock tolerance, the second shock tolerance, and the third shock tolerance may be a value that increases as the degree of vibration detected increases. For example, the degree of vibration may be calculated from the degree of acceleration of the vehicle body in an upper-lower direction or a left-right direction or may be calculated from the stroke amounts of the front and rear suspensions. To be specific, the vibration sensor may be an acceleration sensor or a stroke sensor.

In the above embodiment, the clutch control is started simultaneously with the start of the rotational frequency synchronization control. However, a start timing of the rotational frequency synchronization control and a start timing of the clutch control may be different from each other. For example, after the start of the engine is completed, in other words, after the engine has become the self-rotating state, the rotational frequency synchronization control may be started first, and the clutch control may be started in the middle of the execution of the rotational frequency synchronization control.

The processing of the switching control from the EV mode to the HEV mode in FIG. 3 is described as the processing of the switching control from the EV mode to the HEV mode when the engine 2 is in the stop state. However, the switching from the EV mode to the HEV mode may be started in a state where the engine is driving at low load for warming-up. In this case, Steps S2 and S3 in FIG. 3 may be omitted.

Moreover, in the above embodiment, the clutch does not have to be controlled such that the degree of engagement of the clutch increases during the execution of the rotational frequency synchronization control. Moreover, the above embodiment describes that both of the control that changes the half-engaged time in accordance with the second shock tolerance and the control that changes the torque change time in accordance with the third shock tolerance are executed. However, the control device may execute only one of these. Even in this case, the time from when the state change request is acquired until when the torque output from the traveling driving source reaches the second required torque can be reduced.

For example, the control device of the vehicle may be a control device of a vehicle, the vehicle including: a traveling driving source; a transmission shaft that transmits driving power of the traveling driving source to a driving wheel; and a clutch that switches whether to transmit the driving power of the traveling driving source to the transmission shaft. The control device may include processing circuitry, and the processing circuitry may be configured to: acquire a shock tolerance indicating a tolerance with respect to shock generated at a vehicle body of the vehicle; and as the acquired shock tolerance increases, reduce a half-engaged time that is a time from when an increase in the degree of engagement of the clutch starts until when the clutch is set to an engaged state.

FIG. 14 shows graphs of time changes of values in the switching control, the time changes being different from those shown in FIG. 4. FIG. 14 shows a graph showing the target torque of the engine 2 and the target torque of the electric motor 3 and a graph showing the rotational frequency of the engine 2 and the rotational frequency of the electric motor 3 in this order from an upper side. Specifically, FIG. 14 shows the time changes of the target torque and the rotational frequencies when the hybrid vehicle starts and travels in the EV mode and then changes the traveling mode from the EV mode to the HEV mode. In FIG. 14, after the switching to the HEV mode is completed, the normal traveling state is switched to the power generation traveling state. Moreover, in the graphs of FIG. 14, each target torque is a conversion value of the target torque at the transmission shaft (the input shaft 4a of the transmission 4), and each rotational frequency is a conversion value of the rotational frequency at the transmission shaft (the input shaft 4a of the transmission 4).

In the example shown in FIG. 14, the control of increasing the degree of engagement of the clutch is not executed during the execution of the rotational frequency synchronization control. Therefore, a time change of the clutch pressure is not shown in FIG. 14. For example, after the rotational frequency synchronization control is completed, the control of increasing the degree of engagement of the clutch may be performed. Moreover, the control of changing the half-engaged time in accordance with the second shock tolerance is not executed, either.

As with FIG. 4, the uppermost graph of FIG. 14 shows an example in which the motor target torque and the engine target torque are changed by the tailing control during the transition mode. However, as described above, when it is determined that the third shock tolerance is larger than the predetermined value B, the output torque of the engine is controlled so as to be stepwisely changed as shown by an arrow in FIG. 14. The same is true for the output torque of the motor.

In the above embodiment, the torque change control is described as control in which the output torque of the traveling driving source is changed from the first required torque to the second required torque. However, the torque change control is not limited to this. The torque change control may be control in which the transmitted torque transmitted from the traveling driving source to the driving wheel is changed from the first required torque to the second required torque, and the torque change request may be a request by which the transmitted torque transmitted from the traveling driving source to the driving wheel is changed from the first required torque to the second required torque. For example, in the vehicle in which the output torque of the traveling driving source is transmitted through the clutch and the transmission shaft in this order and then transmitted to the driving wheel, the "transmitted torque transmitted from the traveling driving source to the driving wheel" does not have to be the output torque of the traveling driving source and may be the torque transmitted from the clutch in the half-engaged state to the transmission shaft. To be specific, the torque change control is not limited to control in which the traveling driving source is a control target. The torque change control may be executed in such a manner that the clutch is controlled, i.e., the clutch actuator that operates the clutch is controlled.

Moreover, the "transmitted torque transmitted from the traveling driving source to the driving wheel" may be a total of the output torque of the traveling driving source and the torque transmitted from the clutch to the transmission shaft or may be any one of those. For example, in the hybrid vehicle, the "transmitted torque transmitted from the traveling driving source to the driving wheel" may be a total of torque transmitted to the transmission shaft. For example, the total of the torque transmitted to the transmission shaft may be a total of the torque that is the output torque of the electric motor as the traveling driving source and is transmitted to the transmission shaft and the torque transmitted to the transmission shaft from the clutch located between the internal combustion engine and the transmission shaft.

Between the torque change control that changes certain transmitted torque from the first required torque to the second required torque and the torque change control that changes another certain transmitted torque from the first required torque to the second required torque, a method of calculating the shock tolerance may be changed, or a threshold used in the processing may be changed. For example, between the torque change control in which the output torque of the internal combustion engine or the torque transmitted from the clutch to the transmission shaft is changed from the first required torque to the second required torque and the torque change control in which the output torque of the electric motor is changed from the first required torque to the second required torque, the predetermined value B used in the determination in Step T2 of FIG. 11 may be different, or the torque change rate determined in Step T4 may be different.

The functionality of the elements disclosed herein may be implemented using circuitry or processing circuitry which includes general purpose processors, special purpose processors, integrated circuits, ASICs ("Application Specific Integrated Circuits"), conventional circuitry or any combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware or processor.

### Disclosed Aspects

The following aspects disclose preferred embodiments.

### First Aspect

A control device of a vehicle,
the vehicle including at least one traveling driving source that generates torque for driving a driving wheel,
the control device including processing circuitry configured to execute torque change control in which when the processing circuitry acquires a torque change request by which transmitted torque transmitted from the traveling driving source to the driving wheel is changed from first required torque to second required torque, the processing circuitry changes the transmitted torque from the first required torque to the second required torque, wherein:
   when the processing circuitry acquires the torque change request, the processing circuitry determines a shock tolerance indicating a tolerance with respect to shock generated at a vehicle body of the vehicle; and
   the processing circuitry executes the torque change control such that a torque change time that is a time required to change the transmitted torque from the first required torque to the second required torque is changed in accordance with the determined shock tolerance.

According to the above configuration, the shock tolerance that is the tolerance with respect to the shock generated at the vehicle body is determined, and the torque change time is changed in accordance with the shock tolerance. Therefore, for example, when the occupant cannot accept the shock generated at the vehicle body by changing the torque, the shock generated at the vehicle body can be suppressed by increasing the torque change time. Moreover, for example, when the occupant can accept the shock generated at the vehicle body by changing the torque, the torque change time can be reduced.

Therefore, the time required to change the torque can be reduced while suppressing the uncomfortable feeling of the occupant which is caused by changing the torque for driving the driving wheel.

### Second Aspect

The control device according to the first aspect, wherein:
the torque change control includes tailing control in which the transmitted torque is gradually changed from the first required torque to the second required torque; and
the processing circuitry is configured to execute the tailing control such that the torque change time decreases as the determined shock tolerance increases.

According to the above configuration, when the shock tolerance is relatively large, the time required for the tailing control can be reduced.

### Third Aspect

The control device according to the first or second aspect, wherein:
the transmitted torque is output torque of the traveling driving source; and
the processing circuitry is configured to control the traveling driving source to execute the torque change control.

According to the above configuration, in the control of changing the output torque of the traveling driving source, the time required to change the torque can be reduced while suppressing the uncomfortable feeling of the occupant.

### Fourth Aspect

The control device according to any one of the first to third aspects, wherein:
the at least one traveling driving source includes an electric motor and an internal combustion engine;
the first required torque required as the output torque of the electric motor and the first required torque required as the output torque of the internal combustion engine are respective values obtained in such a manner that total required torque that is torque required for both of the electric motor and the internal combustion engine is distributed at a first distribution ratio;
the second required torque required as the output torque of the electric motor and the second required torque required as the output torque of the internal combustion engine are respective values obtained in such a manner that the total required torque is distributed at a second distribution ratio different from the first distribution ratio; and
the torque change control is control in which the distribution ratio of the total required torque is changed from the first distribution ratio to the second distribution ratio.

According to the above configuration, when executing the control of changing the distribution ratio of the torque required for the electric motor and the internal combustion engine, the time required to change the torque can be reduced while suppressing the uncomfortable feeling of the occupant which is caused by changing the torque for driving the driving wheel.

### Fifth Aspect

The control device according to the fourth aspect, wherein:
the torque change request is a mode switching request by which a first traveling mode in which the driving wheel is driven by power generated by the electric motor is switched to a second traveling mode in which the driving wheel is driven by at least power generated by the internal combustion engine;
the first distribution ratio is a value corresponding to the first traveling mode; and
the second distribution ratio is a value corresponding to the second traveling mode.

According to this configuration, when executing the control of switching the traveling mode, the time required to change the torque can be reduced while suppressing the uncomfortable feeling of the occupant which is caused by changing the torque for driving the driving wheel.

### Sixth Aspect

The control device according to any one of the first to fifth aspects, wherein:
the vehicle includes a transmission that changes speed of rotational power output from the traveling driving source and transmits the power to the driving wheel;
the processing circuitry is configured to acquire change gear ratio information indicating a change gear ratio of the transmission and determine the shock tolerance based on the change gear ratio information; and
the shock tolerance determined by the processing circuitry when the change gear ratio of the transmission is larger than a set change gear ratio is smaller than the shock tolerance determined by the processing circuitry when the change gear ratio of the transmission is not larger than the set change gear ratio.

There is a high possibility that the shock that may be generated at the vehicle body by changing the torque when the change gear ratio of the transmission is large becomes larger than the shock that may be generated when the change gear ratio is small. According to the above configuration, the shock tolerance determined by the processing circuitry when the change gear ratio of the transmission is larger than the set change gear ratio is smaller than the shock tolerance determined by the processing circuitry when the change gear ratio of the transmission is not larger than the set change gear ratio. Therefore, the torque change time can be adjusted such that the shock that may be generated at the vehicle body when the change gear ratio is relatively large is suppressed. The transmission may be a continuously variable transmission.

### Seventh Aspect

The control device according to any one of the first to sixth aspects, wherein:
the vehicle turns while banking the vehicle body toward one side in a vehicle width direction from an upright state; and
the processing circuitry is configured to acquire bank angle information indicating a bank angle of the vehicle body and determine the shock tolerance such that the shock tolerance decreases as the bank angle indicated by the acquired bank angle information increases.

It is desirable that the shock that may be generated at the vehicle body be small when the vehicle body is in a bank state. As described above, the shock tolerance is set to a value that decreases as the bank angle increases. Therefore, the torque change time can be adjusted so as to be suitable for the bank state of the vehicle body.

### Eighth Aspect

The control device according to any one of the first to seventh aspects, wherein:
the vehicle turns while banking the vehicle body toward one side in a vehicle width direction from an upright state;
the vehicle includes a transmission that changes speed of rotational power output from the traveling driving source and transmits the power to the driving wheel; and
the processing circuitry is configured to
   acquire bank angle information indicating a bank angle of the vehicle body and change gear ratio information indicating a change gear ratio of the transmission and
   determine the shock tolerance based on the bank angle information and the change gear ratio information.

According to this configuration, the torque change time can be adjusted so as to be suitable for both of the bank state of the vehicle body and the change gear ratio of the transmission.

### Ninth Aspect

The control device according to any one of the first to eighth aspects, wherein:
the vehicle includes a transmission that changes speed of rotational power output from the traveling driving source at a change gear ratio corresponding to a shift operation of a rider and transmits the power to the driving wheel; and
the processing circuitry is configured to execute the torque change control such that when the processing circuitry acquires, during execution of the torque change control, shift operation information indicating that the shift operation of the rider has been performed, the torque change time becomes shorter than the torque change time when the processing circuitry does not acquire the shift operation information.

According to this configuration, the torque change time can be reduced at the time of the shift operation in which it is assumed that the occupant can accept the shock generated at the vehicle body.

### Tenth Aspect

The control device according to any one of the first to ninth aspects, wherein:
the processing circuitry is configured to selectively execute normal control in which a maximum value of an output of the traveling driving source is set and boost control in which a maximum value of the output of the traveling driving source which is larger than the maximum value in the normal control is set; and
the shock tolerance determined by the processing circuitry in the boost control is larger than the shock tolerance determined by the processing circuitry in the normal control.

According to this configuration, the torque change time can be reduced at the time of the boost control in which it is assumed that the occupant can accept the shock generated at the vehicle body.

### Eleventh Aspect

The control device according to any one of the first to tenth aspects, wherein the processing circuitry is configured to:
when the determined shock tolerance is not larger than a predetermined value, execute, as the torque change control, tailing control in which the transmitted torque is gradually changed from the first required torque to the second required torque; and
when the determined shock tolerance is larger than the predetermined value, execute, as the torque change control, step input control in which the transmitted torque is stepwisely changed from the first required torque to the second required torque.

According to this configuration, when the shock tolerance is larger than the predetermined value, the transmitted torque is stepwisely changed from the first required torque to the second required torque. Therefore, the time required to change the torque can be further reduced.

### Twelfth Aspect

The control device according to any one of the first to eleventh aspects, wherein:
the at least one traveling driving source includes an electric motor and an internal combustion engine;
the vehicle includes
   a transmission shaft that transmits driving power of the electric motor to the driving wheel and
   a clutch that switches whether to transmit driving power of the internal combustion engine to the transmission shaft; and
the processing circuitry is configured to
   when a first traveling mode in which the driving wheel is driven by power generated by the electric motor is changed to a second traveling mode in which the driving wheel is driven by at least power generated by the internal combustion engine, execute rotational frequency synchronization control of controlling the internal combustion engine such that a rotational frequency of the transmission shaft which corresponds to rotation of the engine synchronizes with a rotational frequency of the transmission shaft which corresponds to rotation of the electric motor and
   during execution of the rotational frequency synchronization control, control the clutch such that a degree of engagement of the clutch which corresponds to a degree of power transmission between the internal combustion engine and the transmission shaft increases.

According to the above configuration, since the degree of engagement of the clutch increases during the execution of the rotational frequency synchronization control, the rotation of the transmission shaft is transmitted to the engine so as to increase the rotational frequency of the engine. Thus, the time required for the rotational frequency synchronization control can be made shorter than that when the rotational frequency of the engine is increased by controlling only the engine, for example, by controlling the throttle opening degree. As a result, a time required to change the traveling mode from the first traveling mode to the second traveling mode can be reduced.

### Thirteenth Aspect

A vehicle including:
a driving wheel;
at least one traveling driving source that generates torque for driving the driving wheel; and
the control device according to any one of the first to twelfth aspects which is fixed to the vehicle body.

### Fourteenth Aspect

A vehicle control method of controlling a vehicle including at least one traveling driving source that generates torque for driving a driving wheel,
the method including:
by processing circuitry,
when the vehicle is traveling in a state where transmitted torque transmitted from the traveling driving source to the driving wheel is first required torque, acquiring a state change request to change a state of the vehicle, the state change request including a request to change the transmitted torque from the first required torque to second required torque;
determining a shock tolerance indicating a tolerance with respect to shock generated at a vehicle body of the vehicle; and
changing the state of the vehicle such that a time from when the state change request is acquired until when the transmitted torque reaches the second required torque is changed in accordance with the determined shock tolerance.

For example, the state change request may be the mode switching request by which the first traveling mode in which the driving wheel is driven by the power generated by the electric motor is switched to the second traveling mode in which the driving wheel is switched by at least the power generated by the internal combustion engine.

For example, in the processing circuitry, the time from when the mode switching request is acquired until when the transmitted torque reaches the second required torque may be reduced in such a manner that when the mode switching request is acquired, the half-engaged time that is a time from when the increase in the degree of engagement of the clutch starts until when the clutch is set to the engaged state decreases as the acquired shock tolerance increases. For example, in the processing circuitry, the time from when the mode switching request is acquired until when the transmitted torque reaches the second required torque may be reduced in such a manner that when the mode switching request is acquired, the torque change time that is the time required to change the transmitted torque from the first required torque to the second required torque decreases as the acquired shock tolerance increases. Only one of the half-engaged time or the torque change time may be reduced, or both of them may be reduced.

## Claims

1. A control device of a vehicle,
the vehicle including at least one traveling driving source that generates torque for driving a driving wheel,
the control device comprising processing circuitry configured to execute torque change control in which when the processing circuitry acquires a torque change request by which transmitted torque transmitted from the traveling driving source to the driving wheel is changed from first required torque to second required torque, the processing circuitry changes the transmitted torque from the first required torque to the second required torque, wherein:
when the processing circuitry acquires the torque change request, the processing circuitry determines a shock tolerance indicating a tolerance with respect to shock generated at a vehicle body of the vehicle; and
the processing circuitry executes the torque change control such that a torque change time that is a time required to change the transmitted torque from the first required torque to the second required torque is changed in accordance with the determined shock tolerance.

2. The control device according to claim 1, wherein:
the torque change control includes tailing control in which the transmitted torque is gradually changed from the first required torque to the second required torque; and
the processing circuitry is configured to execute the tailing control such that the torque change time decreases as the determined shock tolerance increases.

3. The control device according to claim 1 or 2, wherein:
the transmitted torque is output torque of the traveling driving source; and
the processing circuitry is configured to control the traveling driving source to execute the torque change control.

4. The control device according to claim 1 or 2, wherein:
the at least one traveling driving source includes an electric motor and an internal combustion engine;
the first required torque required as the output torque of the electric motor and the first required torque required as the output torque of the internal combustion engine are respective values obtained in such a manner that total required torque that is torque required for both of the electric motor and the internal combustion engine is distributed at a first distribution ratio;
the second required torque required as the output torque of the electric motor and the second required torque required as the output torque of the internal combustion engine are respective values obtained in such a manner that the total required torque is distributed at a second distribution ratio different from the first distribution ratio; and
the torque change control is control in which the distribution ratio of the total required torque is changed from the first distribution ratio to the second distribution ratio.

5. The control device according to claim 4, wherein:
the torque change request is a mode switching request by which a first traveling mode in which the driving wheel is driven by power generated by the electric motor is switched to a second traveling mode in which the driving wheel is driven by at least power generated by the internal combustion engine;
the first distribution ratio is a value corresponding to the first traveling mode; and
the second distribution ratio is a value corresponding to the second traveling mode.

6. The control device according to claim 1 or 2, wherein:
the vehicle includes a transmission that changes speed of rotational power output from the traveling driving source and transmits the power to the driving wheel;
the processing circuitry is configured to acquire change gear ratio information indicating a change gear ratio of the transmission and determine the shock tolerance based on the change gear ratio information; and
the shock tolerance determined by the processing circuitry when the change gear ratio of the transmission is larger than a set change gear ratio is smaller than the shock tolerance determined by the processing circuitry when the change gear ratio of the transmission is not larger than the set change gear ratio.

7. The control device according to claim 1 or 2, wherein:
the vehicle turns while banking the vehicle body toward one side in a vehicle width direction from an upright state; and
the processing circuitry is configured to acquire bank angle information indicating a bank angle of the vehicle body and determine the shock tolerance such that the shock tolerance decreases as the bank angle indicated by the acquired bank angle information increases.

8. The control device according to claim 1 or 2, wherein:
the vehicle turns while banking the vehicle body toward one side in a vehicle width direction from an upright state;
the vehicle includes a transmission that changes speed of rotational power output from the traveling driving source and transmits the power to the driving wheel; and
the processing circuitry is configured to
acquire bank angle information indicating a bank angle of the vehicle body and change gear ratio information indicating a change gear ratio of the transmission and
determine the shock tolerance based on the bank angle information and the change gear ratio information.

9. The control device according to claim 1 or 2, wherein:
the vehicle includes a transmission that changes speed of rotational power output from the traveling driving source at a change gear ratio corresponding to a shift operation of a rider and transmits the power to the driving wheel; and
the processing circuitry is configured to execute the torque change control such that when the processing circuitry acquires, during execution of the torque change control, shift operation information indicating that the shift operation of the rider has been performed, the torque change time becomes shorter than the torque change time when the processing circuitry does not acquire the shift operation information.

10. The control device according to claim 1 or 2, wherein:
the processing circuitry is configured to selectively execute normal control in which a maximum value of an output of the traveling driving source is set and boost control in which a maximum value of the output of the traveling driving source which is larger than the maximum value in the normal control is set; and
the shock tolerance determined by the processing circuitry in the boost control is larger than the shock tolerance determined by the processing circuitry in the normal control.

11. The control device according to claim 1 or 2, wherein the processing circuitry is configured to:
when the determined shock tolerance is not larger than a predetermined value, execute, as the torque change control, tailing control in which the transmitted torque is gradually changed from the first required torque to the second required torque; and
when the determined shock tolerance is larger than the predetermined value, execute, as the torque change control, step input control in which the transmitted torque is stepwisely changed from the first required torque to the second required torque.

12. The control device according to claim 1 or 2, wherein:
the at least one traveling driving source includes an electric motor and an internal combustion engine;
the vehicle includes
a transmission shaft that transmits driving power of the electric motor to the driving wheel and
a clutch that switches whether to transmit driving power of the internal combustion engine to the transmission shaft; and
the processing circuitry is configured to
when a first traveling mode in which the driving wheel is driven by power generated by the electric motor is changed to a second traveling mode in which the driving wheel is driven by at least power generated by the internal combustion engine, execute rotational frequency synchronization control of controlling the internal combustion engine such that a rotational frequency of the transmission shaft which corresponds to rotation of the engine synchronizes with a rotational frequency of the transmission shaft which corresponds to rotation of the electric motor and
during execution of the rotational frequency synchronization control, control the clutch such that a degree of engagement of the clutch which corresponds to a degree of power transmission between the internal combustion engine and the transmission shaft increases.

13. A vehicle comprising:
a driving wheel;
at least one traveling driving source that generates torque for driving the driving wheel; and
the control device according to claim 1 or 2 which is fixed to the vehicle body.

14. A vehicle control method of controlling a vehicle including at least one traveling driving source that generates torque for driving a driving wheel,
the method comprising:
by processing circuitry,
when the vehicle is traveling in a state where transmitted torque transmitted from the traveling driving source to the driving wheel is first required torque, acquiring a state change request to change a state of the vehicle, the state change request including a request to change the transmitted torque from the first required torque to second required torque;
determining a shock tolerance indicating a tolerance with respect to shock generated at a vehicle body of the vehicle; and
changing the state of the vehicle such that a time from when the state change request is acquired until when the transmitted torque reaches the second required torque is changed in accordance with the determined shock tolerance.
